# EUROPEAN PATENT APPLICATION

(11) **EP 4 804 549 A1**
(43) Date of publication of application: **09.09.2026**
(21) Application number: 26162478.7
(22) Date of filing: 05.03.2026
(51) Int. Cl.: H04N 23/611, H04N 23/69, H04N 23/695

(54) **PTZ CAMERA CONTROL, DETERMINING AN IMAGE COMPOSITION BASED ON DETECTED FACE DIRECTION.**

(30) Priority: 06.03.2025 JP 2025035858
(71) Applicant: Canon Kabushiki Kaisha, Tokyo 146-8501 (JP)
(72) Inventor: TOYODA, Takuya, Ohta-ku, Tokyo, 146-8501 (JP)
(74) Representative: TBK

(57) **Abstract**

An information processing apparatus determines a face direction of a tracking target from a video captured by an image capturing apparatus, determines a tracking setting regarding an image capturing setting of the tracking target in accordance with a duration of the face direction, and operates a view angle to set a space in the face direction in accordance with the tracking setting.

## Description

### TECHNICAL FIELD

The present disclosure relates to an information processing apparatus, an information processing method, and a computer program.

### BACKGROUND

In recent years, needs for automatically shooting a lecture or a dynamic scene such as a sports scene by a remote camera have increased. In a technique for implementing automatic shooting, a pan/tilt/zoom (to be referred to as PTZ hereinafter) operation is performed so as to fit a tracking target within a screen in accordance with a preset composition regarding the position, the size, and the like of the target within the screen. Thus, in this technique, the tracking target is fit in a view angle (an imaging range) by the pan/tilt/zoom operation.

Japanese Patent Laid-Open No. 2021-57660 discloses a technique of controlling a shooting direction to give a space in a direction in which a detected subject faces.

### SUMMARY

If shooting is performed by the technique disclosed in Japanese Patent Laid-Open No. 2021-57660, the shooting direction is controlled every time the direction of the subject changes, and thus a shooting composition may be changed in a short period, thereby degrading the quality of a video. For example, in a case where a lecture scene is shot, when a teacher looks out at students while explaining, a composition is often changed, thereby degrading the quality of a video.

The present disclosure provides a technique capable of performing shooting with an appropriate shooting composition even if the face direction of a tracking target often changes.

The present disclosure in its first aspect provides an information processing apparatus as specified in claim 1. Optional features are specified in claim 2 to 14.

The present disclosure in its second aspect provides an information processing method as specified in claim 15.

The present disclosure in its third aspect provides a computer program as specified in claim 16.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
Fig. 1 is a block diagram showing the functional configuration of an automatic shooting system including a view angle adjustment apparatus according to the first embodiment;
Figs. 2A and 2B are a flowchart of automatic shooting processing executed by the view angle adjustment apparatus according to the first embodiment;
Fig. 3 is a view showing an example of angle information of a detected face;
Fig. 4A is a graph showing a temporal change of the angle information of the face of a tracking target;
Fig. 4B is a graph, after complementation, showing a temporal change of the angle information of the face of the tracking target;
Fig. 5A is a graph showing a temporal change of the angle information of the face after the face angle is complemented;
Fig. 5B is a graph of a result of determining a face direction;
Fig. 6 is a graph showing a temporal change of the determined face direction;
Fig. 7 is a graph for explaining a case where a composition setting remains unchanged when the face direction is often changed in a short period;
Fig. 8 is a graph for explaining a case where after the composition setting is changed for a right direction, the composition setting is changed when the face turns to the front;
Fig. 9A is a view of an example of an image for explaining a composition setting;
Fig. 9B is a view of another example of an image for explaining a composition setting;
Figs. 10A to 10C are views for explaining a case where the composition setting is changed to give a space in the face direction when the duration of a face direction is longer than a determination time;
Fig. 11 is a block diagram showing the functional configuration of an automatic shooting system including a view angle adjustment apparatus according to the second embodiment;
Figs. 12A, 12B, and 12C are a flowchart of automatic shooting processing executed by the view angle adjustment apparatus according to the second embodiment;
Figs. 13A to 13C are views for explaining a method of determining whether there is an object of interest of a tracking target within a screen;
Fig. 14 is a block diagram showing the functional configuration of an automatic shooting system including a view angle adjustment apparatus according to the third embodiment;
Figs. 15A, 15B, and 15C are a flowchart of automatic shooting processing executed by the view angle adjustment apparatus according to the third embodiment;
Figs. 16A to 16F are views for explaining the magnitude of a change amount of a tracking setting corresponding to the magnitude of the angle of the face of a tracking target according to the third embodiment;
Figs. 17A to 17F are views for explaining the magnitude of a change amount of a tracking setting corresponding to the size of the tracking target displayed on a screen in a composition setting according to the third embodiment;
Figs. 18A to 18F are views for explaining the magnitude of a change amount of a tracking setting corresponding to the moving speed of the tracking target according to the third embodiment;
Fig. 19A is a view for explaining calculation of a change amount according to the third embodiment, and shows the display position of the tracking target in a composition setting;
Fig. 19B is a view showing a shot video including the tracking target; and
Fig. 20 is a block diagram showing the hardware configuration of an information processing apparatus provided in the view angle adjustment apparatus according to the first embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### (First Embodiment)

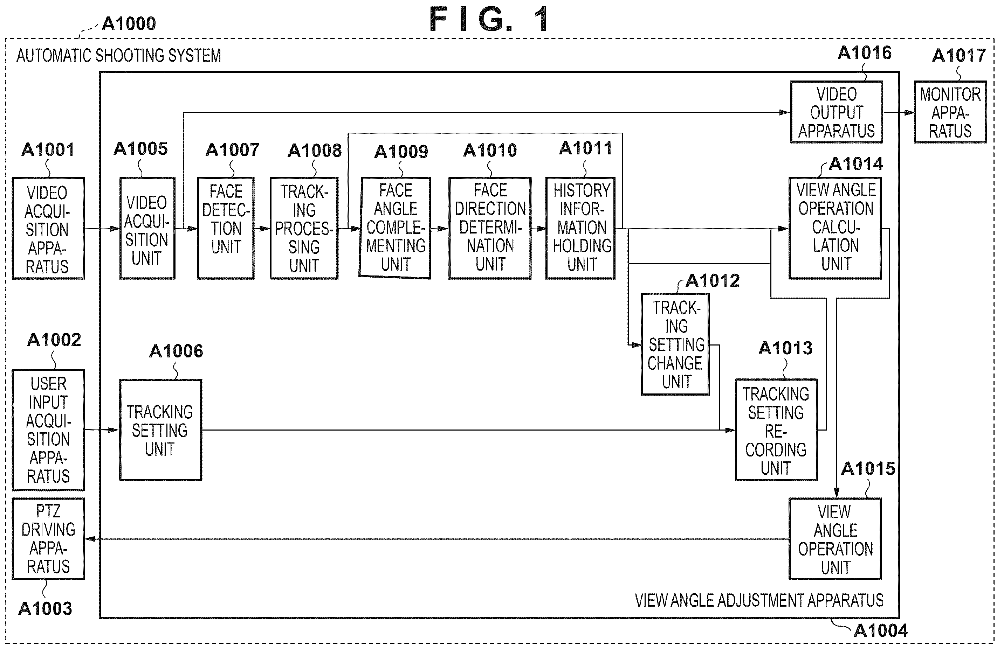

An example of the configuration of an automatic shooting apparatus (an image capturing apparatus) according to the first embodiment will be described with reference to Fig. 1. Fig. 1 is a block diagram showing the functional configuration of an automatic shooting system including a view angle adjustment apparatus according to the first embodiment.

An automatic shooting system A1000 tracks a specific target (to be also referred to as a tracking target hereinafter) and fits the target in a view angle (an angle of view, an imaging range) in accordance with a preset shooting composition.

The automatic shooting system A1000 does not adjust a shooting composition in a case where the face direction of the tracking target often changes in a short period, and adjusts a composition setting to give a space in the direction and performs PTZ control to fit the tracking target within a video in accordance with the composition setting in a case where the duration of the face direction of the tracking target is equal to or longer than a determination time.

More specifically, the automatic shooting system A1000 accepts the composition setting of the tracking target acquired from a user input acquisition apparatus A1002. The automatic shooting system A1000 performs tracking processing of tracking the tracking target based on a video acquired from a video acquisition apparatus A1001. The automatic shooting system A1000 controls a PTZ driving apparatus A1003 to fit the tracking target within a screen in accordance with the acquired composition setting, and performs a view angle operation. In a case where the duration of the face direction of the tracking target is equal to or longer than the determination time, the automatic shooting system A1000 adjusts the composition setting to give a space in the direction (to be also referred to as an attention direction hereinafter). Thus, the automatic shooting system A1000 can perform automatic shooting with the composition in which the space is given in the attention direction of the tracking target, and display a shooting result on a monitor apparatus A1017. A term "video" may include a moving image, a still image, an image, a screen, an image of one frame of a moving image, and data of these.

The automatic shooting system A1000 includes the video acquisition apparatus A1001, the PTZ driving apparatus A1003, a view angle adjustment apparatus A1004, and the monitor apparatus A1017. The view angle adjustment apparatus A1004 is connected, via a network, to the video acquisition apparatus A1001 and the PTZ driving apparatus A1003 to be able to transmit/receive data. The view angle adjustment apparatus A1004 is connected to the monitor apparatus A1017 via a video interface.

The video acquisition apparatus A1001 is an apparatus that generates a shot video by shooting its periphery including a subject. The video acquisition apparatus A1001 is an example of a shooting device (an image capturing device), and is, for example, a shooting apparatus such as a digital camera. The video acquisition apparatus A1001 outputs information of the shot video to the view angle adjustment apparatus A1004.

The user input acquisition apparatus A1002 acquires a tracking setting from the user. The user input acquisition apparatus A1002 accepts user input by displaying a Graphical User Interface (GUI) or the like operating on a Web browser or the like on a display device. The user input acquisition apparatus A1002 outputs the input tracking setting to a tracking setting unit A1006.

The PTZ driving apparatus A1003 changes the view angle of the image capturing apparatus based on a control instruction from the view angle adjustment apparatus A1004. The PTZ driving apparatus A1003 includes a driving device such as a motor for performing pan control, tilt control, and zoom control. The PTZ driving apparatus A1003 executes PTZ driving based on a PTZ control command acquired from a view angle operation unit A1015. The view angle of an image capturing apparatus is changed by performing pan control, tilt control, and zoom control.

The view angle adjustment apparatus A1004 performs tracking processing based on face information detected using an acquired video. The view angle adjustment apparatus A1004 determines a face direction (to be also referred to as a face method hereinafter) from the angle information of the face of the tracking target. If it is determined that the duration of the face direction is equal to or longer than the determination time, the view angle adjustment apparatus A1004 adjusts the view angle to give a space in the face direction, and adjusts the composition setting. This allows the view angle adjustment apparatus A1004 to implement shooting with the composition in which the space is given in the face direction as the attention direction of the tracking target.

The view angle adjustment apparatus A1004 includes a video acquisition unit A1005, the tracking setting unit A1006, a face detection unit A1007, a tracking processing unit A1008, a face angle complementing unit A1009, a face direction determination unit A1010, a history information holding unit A1011, a tracking setting change unit A1012, a tracking setting recording unit A1013, a view angle operation calculation unit A1014, the view angle operation unit A1015, and a video output apparatus A1016.

The video acquisition unit A1005 acquires a video from the video acquisition apparatus A1001. The video acquisition unit A1005 outputs the acquired video to the face detection unit A1007 and the video output apparatus A1016.

The tracking setting unit A1006 acquires the tracking setting from the user input acquisition apparatus A1002, and reflects and outputs it to the tracking setting recording unit A1013. The tracking setting includes at least one of a composition setting, a tracking sensitivity setting, a determination time for determining the duration of the face direction, a change amount when changing the composition setting to give a space in the face direction, and the presence/absence of the change of the composition setting when the face direction is a front direction. Note that the composition setting included in the tracking setting can also be a view angle setting. The tracking setting may include a setting for deciding the initial view angle for tracking in addition to the above-described pieces of information.

The composition setting is a setting regarding the tracking target including the position and size of the tracking target within a screen in order to keep the tracking target within the screen. For example, the composition setting includes a setting for keeping the tracking target at a specific position even if the tracking target moves within the screen. In addition, the composition setting is the setting of the size within the screen to maintain a specific size even if the size of the tracking target changes within the screen.

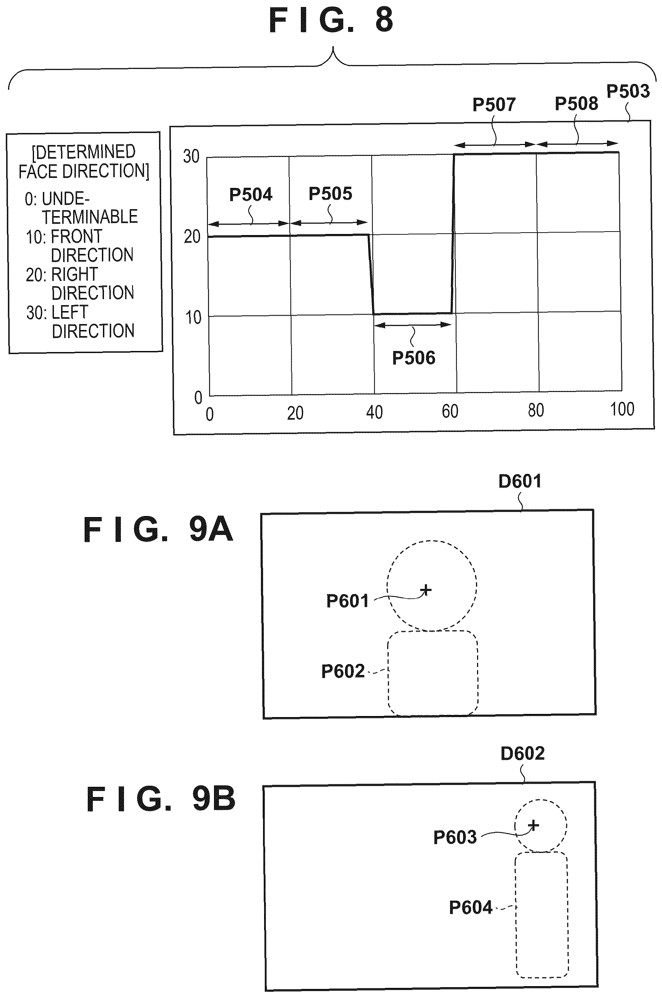

The composition setting will be described with reference to Figs. 9A and 9B. Each of Figs. 9A and 9B is a view of an image for explaining the composition setting. The composition setting includes a setting representing the position and size for displaying the tracking target within the screen. Fig. 9A shows an example of an image D601 for explaining the composition setting. Fig. 9B shows another example of an image D602 for explaining the composition setting.

A position P601 and a position P603 each indicate the display position of the tracking target. A size P602 and a size P604 each indicate the display size of the tracking target. The composition setting of the image D601 includes a size setting in which the position of the tracking target is at the center of the screen and a setting in which the upper body of the tracking target fits within the screen. The composition setting of the image D602 includes a setting in which the position of the tracking target is at the upper right of the screen and a size setting in which the whole body of the tracking target fits within the screen.

The tracking sensitivity setting is a setting representing responsiveness with respect to capturing the tracking target in the set composition. The tracking sensitivity setting includes, for example, a setting for changing the speed of view angle control. Note that the tracking sensitivity setting need only be a setting for changing the responsiveness to capture the tracking target in the view angle and is not particularly limited. The tracking sensitivity setting may be set by a plurality of step values. The larger the value of the tracking sensitivity setting is, the higher the responsiveness is.

The determination time for determining the duration of the face direction, a change amount when changing the composition setting to give a space in the face direction, and the presence/absence of a change of the composition setting when the face direction is the front direction will be described with reference to the tracking setting change unit A1012.

The face detection unit A1007 detects, by face detection processing, the face of the tracking target from the video acquired from the video acquisition unit A1005. The face detection includes detection of the coordinate information of the face and the angle information of the face. The face detection processing need only be processing capable of detecting the face such as a template matching method and a semantic segmentation method, and is not particularly limited. The template matching method and the semantic segmentation method are known techniques, and a detailed description thereof will be omitted. The face detection unit A1007 outputs, as face information, the coordinate information and angle information of the face detected from the video information to the tracking processing unit A1008.

The tracking processing unit A1008 performs tracking processing based on the coordinate information of the face in the face information acquired from the face detection unit A1007. If the tracking processing is not performed, the tracking processing unit A1008 selects the tracking target and starts tracking processing. On the other hand, if the tracking processing is performed, the tracking processing unit A1008 inputs the acquired coordinate information of the face and performs tracking processing.

The tracking processing unit A1008 may select a face on the screen as the tracking target. The tracking processing unit A1008 may select the tracking target in accordance with preset region information. The tracking processing unit A1008 may select the tracking target by user input. Note that the method of selecting the tracking target by the tracking processing unit A1008 is not particularly limited.

In the tracking processing, the tracking processing unit A1008 associates, based on the acquired face information, the position information and size information of the selected tracking target in the previous frame and the position information and size information of the tracking target in the current frame with each other. Note that the tracking processing is not particularly limited. For example, if a position predicted from the movement history of the tracking target is associated with the position of the detected face, the tracking processing unit A1008 may set the position as the position of the tracking target. The tracking processing unit A1008 outputs the result of the tracking processing and the angle information of the face to the face angle complementing unit A1009.

If the angle of the face of the tracking target is not detected, the face angle complementing unit A1009 complements the angle information of the face. For example, the face angle complementing unit A1009 complements the angle information of the face based on the result of the tracking processing acquired from the tracking processing unit A1008, the angle information of the face, and the history information of the angle of the face acquired from the history information holding unit A1011.

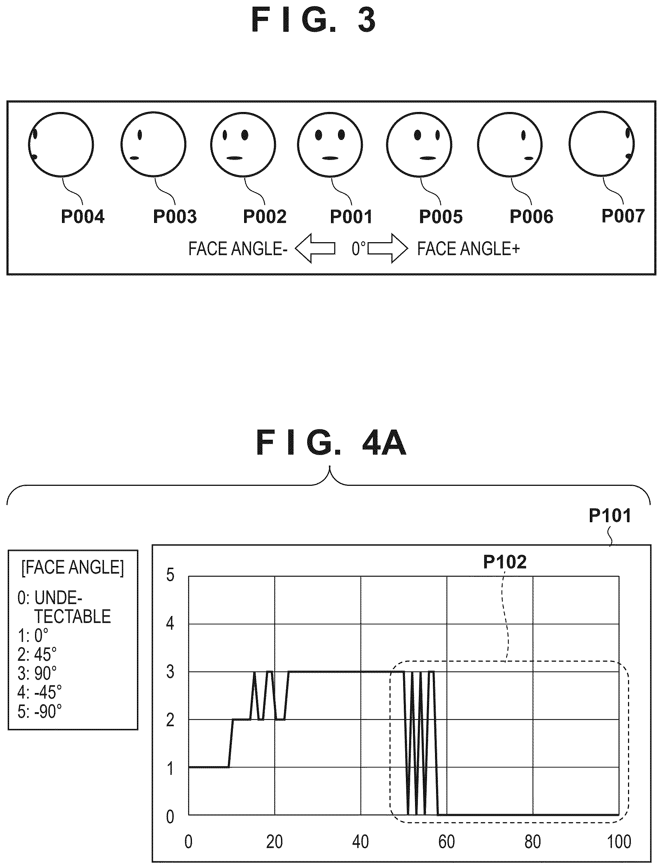

Fig. 3 is a view showing an example of the angle information of the detected face. An example in a case where the resolution of the face angle is 45° will now be described. Note that the resolution is not limited to 45°.

A face P001 indicates a state in which the face angle is 0° (front). A face P002 indicates a state in which the face angle is -45° (left oblique). A face P003 indicates a state in which the face angle is -90° (left). A face P004 indicates a state in which the face angle is undetectable. A face P005 indicates a state in which the face angle is 45° (right oblique). A face P006 indicates a state in which the face angle is 90° (right). A face P007 indicates a state in which the face angle is undetectable.

In a case where the face angle is larger than 90° or smaller than -90° like the face P004 and the face P007, and the feature of the face cannot be extracted sufficiently, the face angle cannot be detected. In this case, the face angle complementing unit A1009 complements the angle information of the current face using the angle information of the face in the previous frame included in the history information.

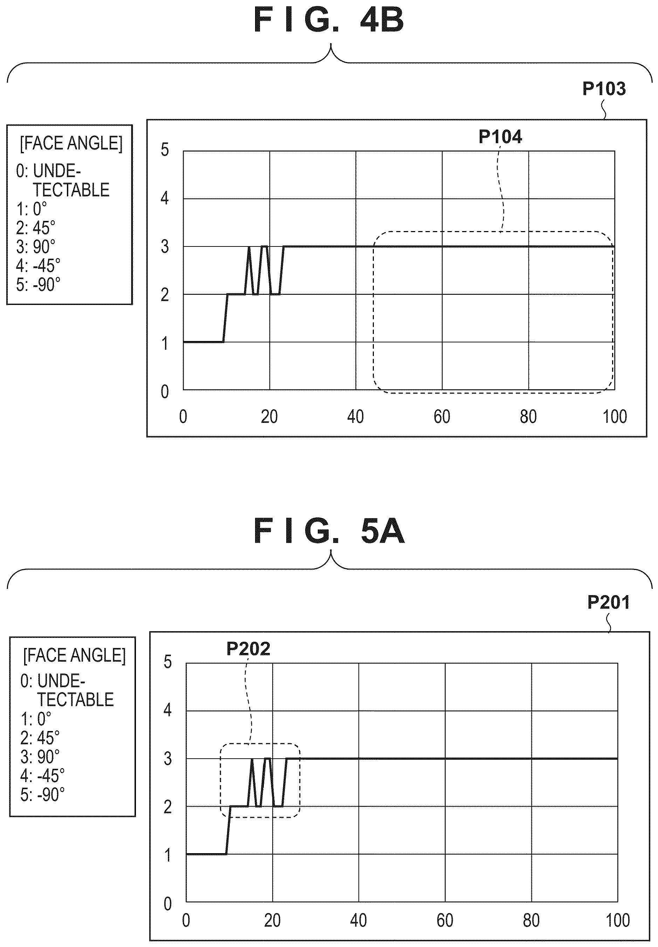

Figs. 4A and 4B are graphs for explaining complementation of the angle information of the face of the tracking target. In Figs. 4A and 4B, the ordinate represents the angle and the abscissa represents the time. Complementation by the angle of the face detected in the previous frame in a case where the angle of the face of the tracking target cannot be detected according to the first embodiment will be described with reference to Figs. 4A and 4B.

Fig. 4A shows a graph P101 representing a temporal change of the angle information of the face of the tracking target. The graph P101 shows the temporal change of the angle when the face turns from the front to the right. In this case, the face angle significantly changes in the order of 0° → 45° → 90° → undetectable. After the face angle becomes 90°, it is undetectable. It can be assumed that this is because when the face angle becomes 90° or more, the feature of the face cannot be extracted sufficiently, and the face angle cannot be detected. In this case, it can be assumed that the face direction remains the right direction. Therefore, if the face angle is undetectable, the face angle complementing unit A1009 can estimate the angle of the face of the tracking target by complementing the face angle by the angle before the face angle becomes undetectable.

Fig. 4B shows a graph P103, after complementation, representing a temporal change of the angle information of the face of the tracking target. The graph P103 is a graph obtained by complementing the angle information of the face using the value before the face angle becomes undetectable within a range P102 of the graph P101. A range P104 of the graph P103 is a complemented range. As described above, when the angle of the face of the tracking target is not detected, the face angle complementing unit A1009 performs complement processing using the angle information of the face in the previous frame from the history information. The face angle complementing unit A1009 outputs the complemented face angle information and the tracking processing result to the face direction determination unit A1010.

The face direction determination unit A1010 determines the direction of the face of the tracking target based on the face angle information and the tracking processing result acquired from the face angle complementing unit A1009. The face direction includes, for example, a front direction, a right direction, a left direction, and an undeterminable direction. The face direction determination unit A1010 may determine the face direction by comparing the angle information of the face of the tracking target with a threshold.

If the face angle is 0°, the face direction determination unit A1010 determines that the face direction is the front direction. If the face angle is 45° or 90°, the face direction determination unit A1010 determines that the face direction is the right direction. If the face angle is -45° or -90°, the face direction determination unit A1010 determines that the face direction is the left direction. If the face angle is undetectable, the face direction determination unit A1010 determines that the face direction is undeterminable. Note that the determination method is not limited to this. For example, if the face angle is ±45°, the face direction determination unit A1010 may determine that the face direction is the front direction.

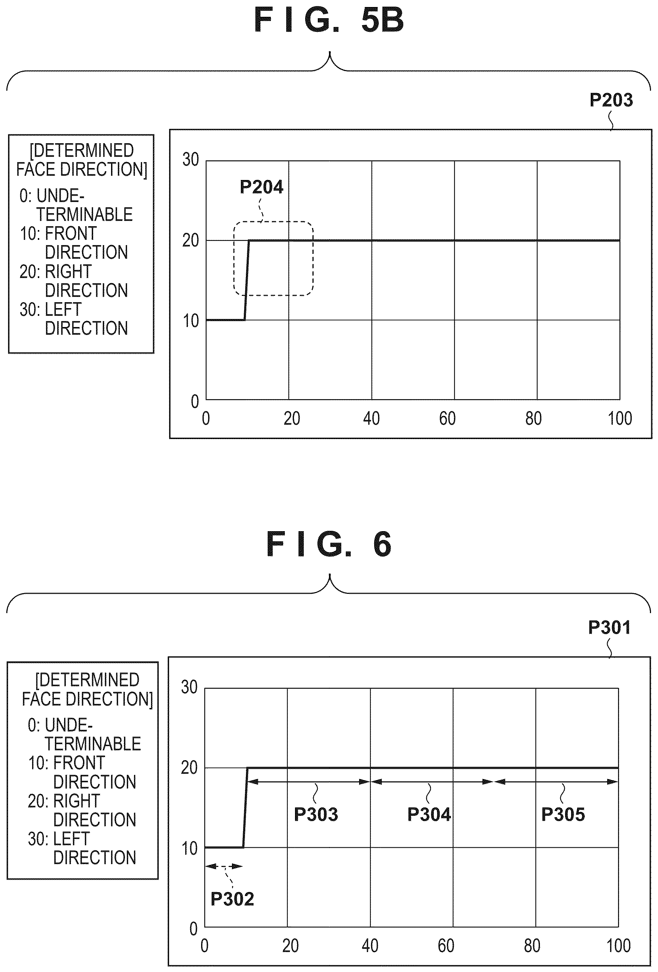

Figs. 5A and 5B are graphs for explaining face direction determination. Face direction determination performed by executing threshold processing for the complemented face angle information according to the first embodiment will be described with reference to Figs. 5A and 5B. Fig. 5A shows a graph P201 representing a temporal change of the angle information of the face after the angle of the face is complemented. In Fig. 5A, the ordinate and the abscissa are the same as those in Fig. 4A. Within a range P202, the face angle repeatedly changes between 45° and 90° and the face direction determination unit A1010 may determine that the face direction is the right direction. Fig. 5B shows a graph P203 of a result of determining the face direction. In Fig. 5B, the ordinate represents the face direction as the determination result. Within a range P204, the face direction determination unit A1010 determines that the face direction is the right direction. The face direction determination unit A1010 outputs the determined face direction information, the face angle information, and the tracking processing result to the history information holding unit A1011.

The history information holding unit A1011 holds, as history information, the tracking processing result, the face direction information, and the face angle information acquired from the face direction determination unit A1010. The history information holding unit A1011 outputs the history information to the face angle complementing unit A1009, the tracking setting change unit A1012, and the view angle operation calculation unit A1014.

The tracking setting change unit A1012 determines whether it is necessary to change the composition setting based on the tracking processing result and the face direction information acquired from the history information holding unit A1011 and the tracking setting acquired from the tracking setting recording unit A1013. The change of the composition setting may be a change of the view angle or the shooting range. The tracking setting change unit A1012 may compare, with a preset determination time, the duration as the time during which the face continues to face in the same direction, and determine whether it is necessary to change the composition setting. More specifically, if the duration of the face direction is equal to or longer than the determination time, the tracking setting change unit A1012 may determine that it is necessary to change the composition setting or the view angle. If it is determined that it is necessary to change the composition setting, the tracking setting change unit A1012 changes the composition setting.

Determination of whether it is necessary to change the composition setting will be described with reference to Fig. 6. Fig. 6 shows a graph P301 representing a temporal change of the determined face direction. A method of determining whether the duration of the same face direction is longer than the determination time using the determined face direction information according to the first embodiment will be described with reference to Fig. 6. In Fig. 6, the ordinate and the abscissa are the same as those in Fig. 5B. Sections P302, P303, P304, and P305 each present a section during which the same face direction continues.

If the time (to be also referred to as the duration hereinafter) during which the same face direction continues is longer than the determination time of the tracking setting, the tracking setting change unit A1012 changes the composition setting to give a space in the direction in which the face faces. On the other hand, if the duration is shorter than the determination time, the tracking setting change unit A1012 does not change the composition setting.

The length of the determination time to be compared with the duration may be preset and adjusted in accordance with the determination time of the tracking setting. For example, in a case where a three-stage determination time is preset in the tracking setting, the tracking setting change unit A1012, the user, or the like may adjust the length of the determination time in three stages.

In the example shown in Fig. 6, since the section P302 is shorter than the determination time, the tracking setting change unit A1012 does not change the composition setting. On the other hand, since each of the sections P303 to P305 is longer than the determination time, the tracking setting change unit A1012 changes the composition setting. However, since the composition has already been changed in the sections P304 and P305, the tracking setting change unit A1012 does not change the composition setting to avoid duplication of the change.

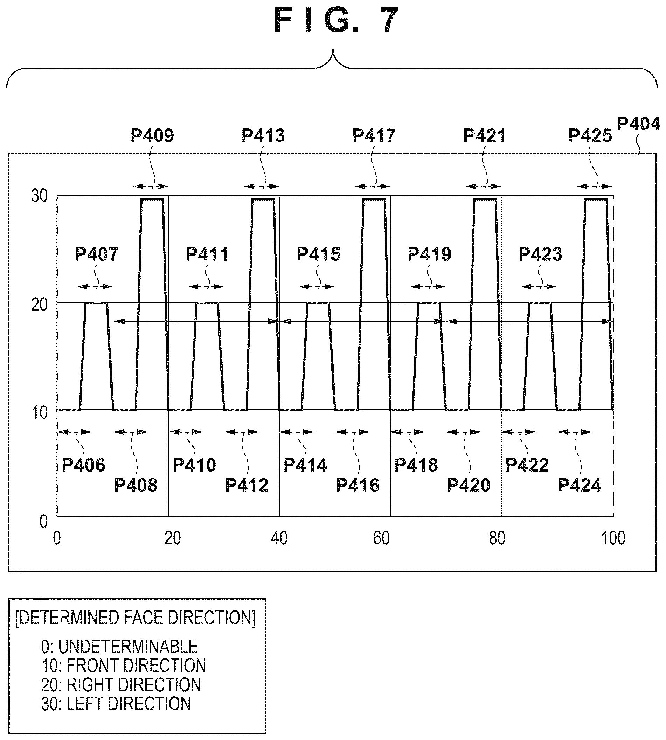

Fig. 7 is a graph for explaining a case where the composition setting is not changed when the face direction is often changed in a short period. It will be explained with reference to Fig. 7 that when the face turns to the left and right in a short period, the composition setting is not changed according to the first embodiment.

A graph P404 represents a temporal change of the determined face direction in a case where the face turns to the left and right in a short time. Each of sections P406 to P425 represents a period during which each face direction continues. Each of the sections P406 to P425 is shorter than the determination time. Therefore, in any of the sections P406 to P425, the tracking setting change unit A1012 does not change the composition setting even when the face direction changes. That is, the graph P404 represents that even when the face direction often changes in a short period, the tracking setting change unit A1012 does not change the composition setting for each change.

Fig. 8 is a graph for explaining a case where after the composition setting is changed for the right-facing direction, the composition setting is changed when the face turns to the front. A graph P503 represents a temporal change of the face direction estimated when the face direction is changed from the right direction to the front direction and then changed to the left direction. Sections P504 and P505 indicate that the right-facing direction continues. Sections P507 and P508 indicate that the left-facing direction continues. A section P506 indicates that the front-facing direction continues. Each of the sections P504 to P508 is longer than the determination time. Therefore, the tracking setting change unit A1012 changes the composition setting to give a space in the face direction.

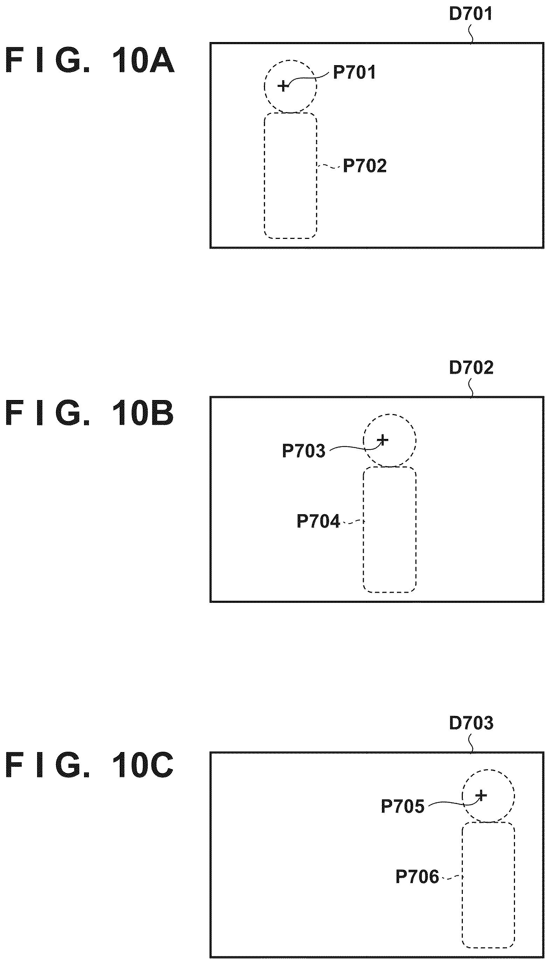

Figs. 10A to 10C are views for explaining a case where the composition setting is changed to give a space in the face direction when the duration of the face direction is longer than the determination time. Figs. 10A, 10B, and 10C show images D701 to D703 of the composition setting, respectively. Positions P701, P703, and P705 each indicate the display position of the tracking target. Sizes P702, P704, and P706 each indicate the display size of the tracking target.

The image D701 shows that when the tracking target faces in the right direction, the tracking setting change unit A1012 changes the composition setting to capture the tracking target at a position where a space is given to the right side. The image D703 shows that when the tracking target faces in the left direction, the tracking setting change unit A1012 changes the composition setting to capture the tracking target at a position where a space is given to the left side.

The tracking setting change unit A1012 may adjust, based on the change amount of the preset tracking setting, the position where the composition is changed when changing the composition setting, that is, a change amount to give a space in the face direction. For example, if the tracking setting includes a three-stage change amount, the tracking setting change unit A1012, the user, or the like may adjust the change amount (also called an opening degree) in three stages.

The image D702 shows that when the tracking target turns to the front, the tracking setting change unit A1012 changes the composition setting to capture the tracking target at the center of the screen. However, in a case where the tracking target turns to the front and it is desirable to perform shooting without changing the composition setting as shown in the image D702, the tracking setting change unit A1012 may switch the presence/absence of the change of the composition setting by the tracking setting. The tracking setting change unit A1012 outputs the changed tracking setting to the tracking setting recording unit A1013.

The tracking setting recording unit A1013 records the tracking setting acquired from the tracking setting unit A1006 or the tracking setting acquired from the tracking setting change unitA1012. The tracking setting recording unit A1013 outputs the recorded tracking setting to the tracking setting change unit A1012 and the view angle operation calculation unit A1014.

The view angle operation calculation unit A1014 calculates information for controlling the view angle based on the tracking processing result acquired from the history information holding unit A1011 and the tracking setting acquired from the tracking setting recording unit A1013. The information for controlling the view angle includes the direction of the view angle and the speed. The tracking setting includes the tracking setting changed by the tracking setting change unit A1012. Assume that the unit of the speed for controlling the view angle is "deg/s" representing an angle by which the barrel of the video acquisition apparatus A1001 as a camera is moved per unit time. Note that the unit of the speed for controlling the view angle may be changed appropriately, and is not limited.

The view angle operation calculation unit A1014 calculates, from the current position and size of the tracking target within the screen, a view angle value for obtaining the position and size designated in the composition setting. The view angle operation calculation unit A1014 calculates the direction and speed for controlling the view angle based on the difference between the current view angle value of the camera and the calculated view angle value, and the tracking sensitivity setting. In this example, the view angle operation calculation unit A1014 calculates, as view angle control information, the direction and speed for controlling the view angle, but the calculation target and the calculation method are not limited to these. For example, as long as the view angle operation calculation unit A1014 can calculate pan control information and tilt control information so that the position of the tracking target matches the display position in the composition setting, and calculate a zoom control value so that the size of the tracking target matches the display size in the composition setting, the calculation target and the calculation method are not limited. The view angle operation calculation unit A1014 may calculate the view angle value so that the position and size of the face of the tracking target match those in the composition setting. For example, the view angle operation calculation unit A1014 may calculate an operation position, a zoom magnification, and the like. The view angle operation calculation unit A1014 outputs, as view angle control information, the calculated direction and speed for controlling the view angle to the view angle operation unit A1015.

The view angle operation unit A1015 operates the view angle based on the view angle control information acquired from the view angle operation calculation unit A1014. More specifically, the view angle operation unit A1015 creates a PTZ control command based on the view angle control information. The view angle operation unit A1015 outputs the created PTZ control command to the PTZ driving apparatus A1003, thereby operating the view angle. For example, in a case where the duration of the face direction is longer than the determination time, the view angle operation unit A1015 operates the view angle to give a space in the face direction.

The video output apparatus A1016 outputs the video acquired from the video acquisition unit A1005 to the monitor apparatus A1017.

The monitor apparatus A1017 displays, on a monitor, the video acquired from the video output apparatus A1016. The monitor apparatus A1017 may be, for example, a liquid crystal display device, an organic Electro Luminescence (EL) display device, or the like.

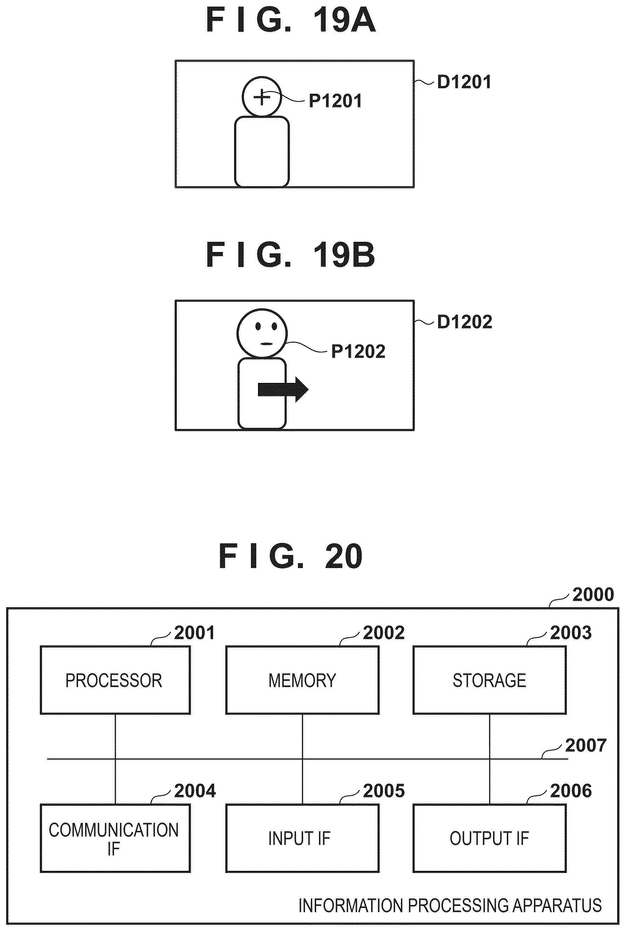

The hardware configuration of the view angle adjustment apparatus A1004 will be described with reference to Fig. 20. Fig. 20 is a block diagram showing the hardware configuration of an information processing apparatus 2000 provided in the view angle adjustment apparatus A1004 according to the first embodiment.

The information processing apparatus 2000 is an example of a computer. The information processing apparatus 2000 of the view angle adjustment apparatus A1004 includes a processor 2001, a memory 2002, a storage 2003, a communication IF 2004, an input IF 2005, an output IF 2006, and a bus 2007. The processor 2001, the memory 2002, the storage 2003, the communication IF 2004, the input IF 2005, and the output IF 2006 are connected via the bus 2007 to be able to transmit/receive information.

The processor 2001 is an arithmetic processing unit, and is, for example, a Central Processing Unit (CPU). Note that instead of or in addition to the CPU, the information processing apparatus 2000 may include other processors such as a Micro Processing Unit (MPU), a Graphics Processing Unit (GPU), a Neural Processing Unit (NPU), and a Quantum Processing Unit (QPU). The processor 2001 reads out programs stored in the storage 2003, and deploys them in the memory 2002, thereby implementing various functions. For example, by loading programs, the processor 2001 implements some or all of the functions of the video acquisition unit A1005, the tracking setting unit A1006, the face detection unit A1007, the tracking processing unit A1008, the face angle complementing unit A1009, the face direction determination unit A1010, the history information holding unit A1011, the tracking setting change unit A1012, the tracking setting recording unit A1013, the view angle operation calculation unit A1014, the view angle operation unit A1015, and the video output apparatus A1016. Note that some or all of the functions of the video acquisition unit A1005, the tracking setting unit A1006, the face detection unit A1007, the tracking processing unit A1008, the face angle complementing unit A1009, the face direction determination unit A1010, the history information holding unit A1011, the tracking setting change unit A1012, the tracking setting recording unit A1013, the view angle operation calculation unit A1014, the view angle operation unit A1015, and the video output apparatus A1016 may be implemented by one or a plurality of circuits such as an Application Specific Integrated Circuit (ASIC) and a Programmable Logic Device (PLD) including a Field Programmable Gate Array (FPGA).

The memory 2002 is, for example, a storage device capable of high-speed read/write such as a Random Access Memory (RAM). The memory 2002 functions as a work area when the processor 2001 executes a program. The memory 2002 temporarily stores programs and parameters necessary to execute the programs.

The storage 2003 is, for example, a nonvolatile storage device such as a Hard Disk Drive (HDD) and a Solid State Drive (SSD). The storage 2003 holds programs, parameters necessary to execute the programs, the result of execution of the programs, and the like even in a state in which no power is supplied.

The communication IF 2004 is an interface for implementing communication with an external apparatus such as the video acquisition apparatus A1001 and the PTZ driving apparatus A1003 via a wired or wireless network.

The input IF 2005 is an interface for accepting input of information from an input device. The input device is, for example, a mouse, a keyboard, a touch panel, or the like. The tracking setting unit A1006 according to this embodiment acquires the tracking setting input via the input IF 2005, and the like.

The output IF 2006 is an interface for outputting information to the monitor apparatus A1017.

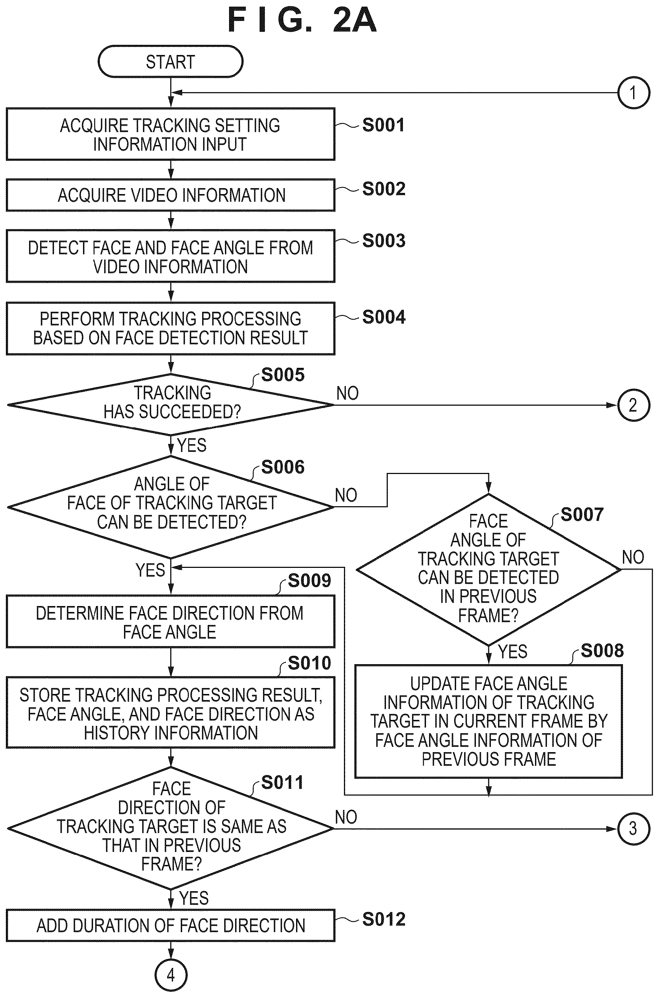

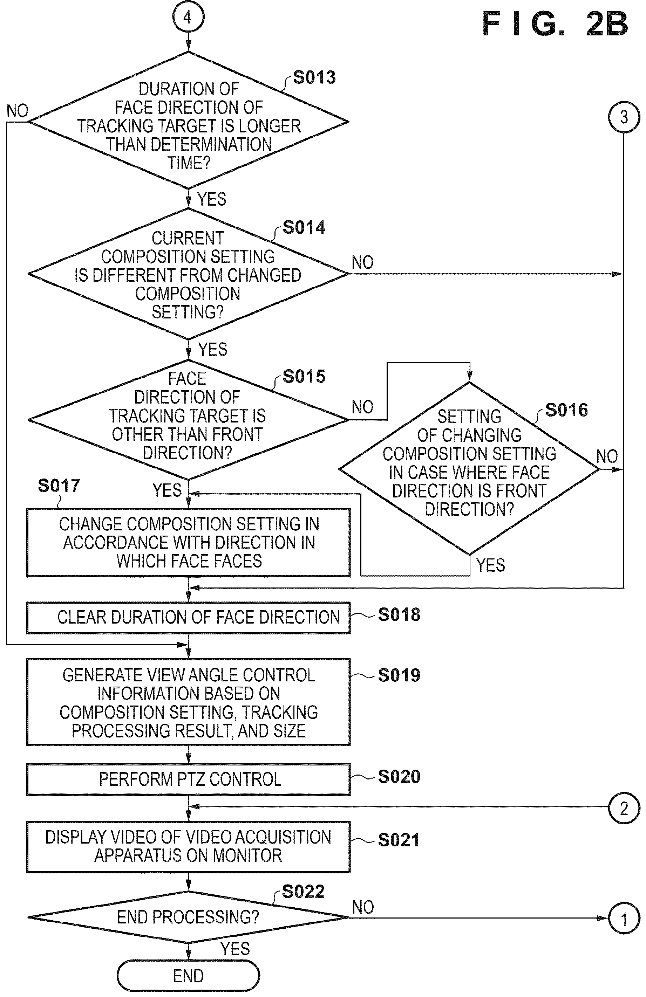

A procedure of performing automatic shooting processing of the automatic shooting system will be described with reference to a flowchart shown in Figs. 2A, and 2B. Figs. 2 A, and 2B are a flowchart of automatic shooting processing executed by the view angle adjustment apparatus A1004 according to the first embodiment. The automatic shooting system A1000 starts automatic shooting processing upon activation by a user operation.

In step S001, the tracking setting unit A1006 acquires tracking setting information input from the user input acquisition apparatus A1002. The tracking setting unit A1006 outputs the tracking setting information to the tracking setting recording unit A1013, and the process advances to step S002.

In step S002, the video acquisition unit A1005 acquires information of a shot video from the video acquisition apparatus A1001. The video acquisition unit A1005 outputs the shot video to the face detection unit A1007, the video output apparatus A1016, and an object detection unit B1018, and the process advances to step S003.

In step S003, the face detection unit A1007 performs face detection for detecting a face, the position of the face, and the angle of the face using the acquired shot video. The face detection unit A1007 outputs a face detection result including the detected face and the position information and the angle information of the face to the tracking processing unit A1008, and the process advances to step S004.

In step S004, the tracking processing unit A1008 selects a tracking target from the acquired face detection result, and performs tracking processing. The tracking processing unit A1008 outputs a tracking processing result including coordinate information of the tracking target and the angle information of the face to the face angle complementing unit A1009, and the process advances to step S005.

In step S005, the tracking processing unit A1008 determines whether tracking by the tracking processing has succeeded. If the tracking processing unit A1008 determines that tracking has succeeded (YES in step S005), the process advances to step S006. On the other hand, if the tracking processing unit A1008 determines that tracking has failed (NO in step S005), the process advances to step S021.

In step S006, by using the acquired coordinate information of the tracking target and the acquired angle information of the face, the face angle complementing unit A1009 determines whether the angle of the face of the tracking target can be detected. If the face angle complementing unit A1009 determines that the angle of the face of the tracking target can be detected (YES in step S006), it outputs the tracking processing result and the face angle information to the face direction determination unit A1010, and the process advances to step S009. On the other hand, if the face angle complementing unit A1009 determines that the angle of the face of the tracking target cannot be detected (NO in step S006), the process advances to step S007.

In step S007, by using the history information of the acquired face angle, the face angle complementing unit A1009 determines whether the face angle of the tracking target can be detected in the previous frame. If the face angle complementing unit A1009 determines that the face angle of the tracking target can be detected in the previous frame (YES in step S007), the process advances to step S008. On the other hand, if the face angle complementing unit A1009 determines that the face angle of the tracking target cannot be detected in the previous frame (NO in step S007), it outputs the tracking processing result and the face angle information to the face direction determination unit A1010, and the process advances to step S009.

In step S008, the face angle complementing unit A1009 complements and updates the face angle information of the tracking target in the current frame by the face angle information of the previous frame indicated by the history information of the face angle. The face angle complementing unit A1009 outputs the tracking processing result and the face angle information to the face direction determination unit A1010, and the process advances to step S009.

In step S009, the face direction determination unit A1010 determines the face direction of the tracking target based on the acquired tracking processing result and face angle information. The face direction determination unit A1010 outputs the determined face direction information, the tracking processing result, and the face angle information to the history information holding unit A1011, and the process advances to step S010.

In step S010, the history information holding unit A1011 stores the acquired tracking processing result, face angle information, and face direction information as history information. The history information holding unit A1011 outputs the history information to the face angle complementing unit A1009, the tracking setting change unit A1012, and the view angle operation calculation unit A1014, and the process advances to step S011.

In step S011, by using the acquired history information, the tracking setting change unit A1012 determines whether the face direction of the tracking target is the same as that in the previous frame. If the tracking setting change unit A1012 determines that the face direction of the tracking target is the same as that in the previous frame (YES in step S011), the process advances to step S012. On the other hand, if the tracking setting change unit A1012 determines that the face direction of the tracking target is not the same as that in the previous frame (NO in step S011), the process advances to step S018.

In step S012, the tracking setting change unit A1012 adds the duration of the face direction of the tracking target, and the process advances to step S013.

In step S013, the tracking setting change unit A1012 determines whether it is necessary to change the composition setting by determining whether the duration of the face direction of the tracking target is longer than the determination time. If the tracking setting change unit A1012 determines that the duration of the face direction of the tracking target is longer than the determination time and it is necessary to change the composition setting (YES in step S013), the process advances to step S014. On the other hand, if the tracking setting change unit A1012 determines that the duration of the face direction of the tracking target is shorter than the determination time and it is unnecessary to change the composition setting (NO in step S013), the process advances to step S019.

In step S014, the tracking setting change unit A1012 determines whether the current composition setting is different from the changed composition setting. If the tracking setting change unit A1012 determines that the current composition setting is different from the changed composition setting (YES in step S014), the process advances to step S015. On the other hand, if the tracking setting change unit A1012 determines that the current composition setting is the same as the changed composition setting (NO in step S014), the process advances to step S018.

In step S015, the tracking setting change unit A1012 determines whether the face direction of the tracking target is other than the front direction. If the tracking setting change unit A1012 determines that the face direction of the tracking target is other than the front direction (YES in step S015), the process advances to step S017. On the other hand, if the tracking setting change unit A1012 determines that the face direction of the tracking target is the front direction (NO in step S015), the process advances to step S016.

In step S016, the tracking setting change unit A1012 determines whether a setting of changing the composition setting in a case where the face direction of the tracking target is the front direction is made as the tracking setting. If the tracking setting change unit A1012 determines that a setting of changing the composition setting in a case where the face direction of the tracking target is the front direction is made as the tracking setting (YES in step S016), the process advances to step S017. On the other hand, if the tracking setting change unit A1012 determines that a setting of changing the composition setting in a case where the face direction of the tracking target is the front direction is not made as the tracking setting (NO in step S016), that is, a setting of maintaining the current composition setting in a case where the face direction is the front direction is made, the process advances to step S018.

In step S017, the tracking setting change unit A1012 changes the composition setting in accordance with a direction in which the face of the tracking target faces, and outputs the changed composition setting to the tracking setting recording unit A1013. The tracking setting recording unit A1013 outputs the tracking setting including the acquired composition setting to the tracking setting change unit A1012 and the view angle operation calculation unit A1014, and the process advances to step S018.

In step S018, the tracking setting change unit A1012 clears the duration of the face direction of the tracking target, and the process advances to step S019.

In step S019, the view angle operation calculation unit A1014 calculates, based on the acquired composition setting and the tracking processing result, view angle control information for controlling the view angle. The view angle operation calculation unit A1014 outputs the view angle control information to the view angle operation unit A1015, and the process advances to step S020.

In step S020, the view angle operation unit A1015 generates a PTZ control command based on the acquired view angle control information, outputs the PTZ control command to the PTZ driving apparatus A1003, and performs PTZ control, and the process advances to step S021. The PTZ driving apparatus A1003 changes the shooting view angle by performing PTZ driving based on the acquired PTZ control command.

In step S021, the video output apparatus A1016 outputs video information acquired from the video acquisition apparatus A1001 to the monitor apparatus A1017, and the process advances to step S022. The monitor apparatus A1017 displays the acquired video.

In step S022, based on a stop operation of the automatic shooting processing, the tracking setting unit A1006 determines whether to end the processing. For example, the tracking setting unit A1006 may perform this determination processing based on whether an automatic shooting system ON/OFF switch (not shown) is operated by a user operation from the user input acquisition apparatus A1002. If the tracking setting unit A1006 determines that no stop operation is performed (NO in step S022), the process returns to step S001. On the other hand, if the tracking setting unit A1006 determines that the stop operation is performed (YES in step S022), the automatic shooting processing ends.

As described above, according to the first embodiment, in a case where the duration of the face direction of the tracking target is equal to or longer than the determination time, the composition setting included in the tracking setting is changed to give a space in the face direction. Then, in the first embodiment, a view angle operation is performed so as to fit the tracking target within a screen in accordance with the composition setting. Thus, in the first embodiment, it is possible to suppress a degradation in quality of a video even in a case where the face direction of the tracking target often changes.

According to the first embodiment, even in a case where the face angle cannot be detected, the face angle is complemented by the previous frame, and thus more face directions can be determined.

### (Second Embodiment)

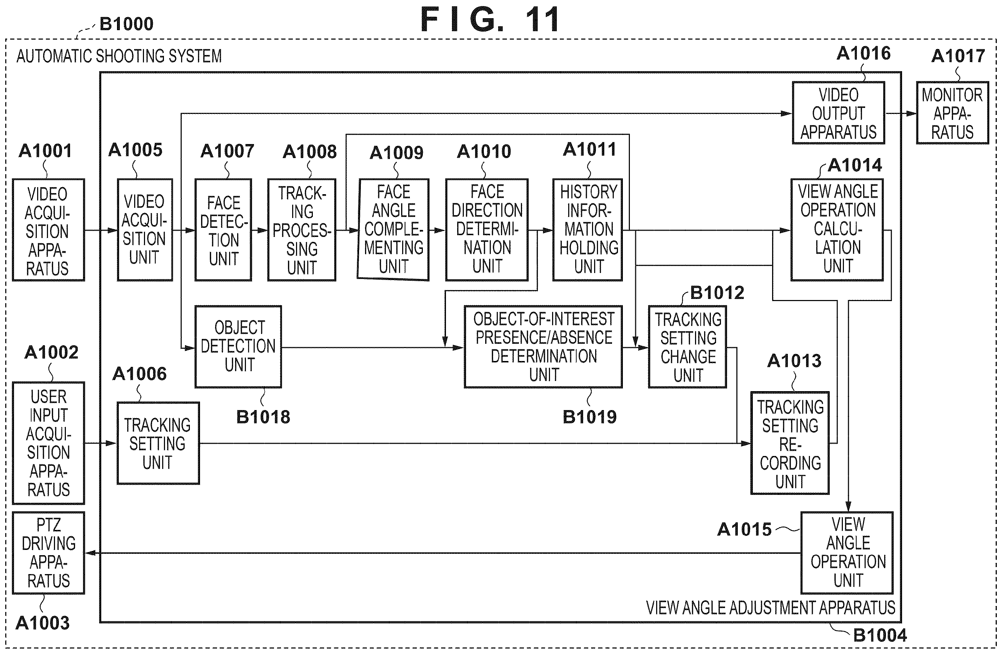

An example of the configuration of an automatic shooting system according to the second embodiment will be described with reference to Fig. 11. Fig. 11 is a block diagram showing the functional configuration of an automatic shooting system including a view angle adjustment apparatus according to the second embodiment.

An automatic shooting system B1000 performs tracking processing based on a video acquired from a video acquisition apparatus A1001, and performs a view angle operation using a PTZ driving apparatus A1003 so as to fit a tracking target within a screen in accordance with the composition setting of the tracking target acquired from a user input acquisition apparatus A1002. It is determined whether there is an object of interest of the tracking target within the screen, and a determination time of a tracking setting is adjusted accordingly. In this system, in a case where the face of the tracking target continues to face in the same direction for the determination time, the composition setting is changed to give a space in the face direction, thereby making it possible to perform automatic shooting with a composition in which a space is given in the attention direction of the tracking target and to display a shooting result on a monitor apparatus A1017.

The automatic shooting system B1000 can include the video acquisition apparatus A1001, the PTZ driving apparatus A1003, a view angle adjustment apparatus B1004, and the monitor apparatus A1017. The view angle adjustment apparatus B1004 is connected to the video acquisition apparatus A1001 and the PTZ driving apparatus A1003 via a network. In addition, the view angle adjustment apparatus B1004 and the monitor apparatus A1017 are connected via a video interface.

The view angle adjustment apparatus B1004 performs tracking processing based on face information detected using an acquired video. In a case where there is an object of interest of the tracking target within the screen, the view angle adjustment apparatus B1004 shortens the determination time of the tracking setting. On the other hand, if there is no object of interest, the view angle adjustment apparatus B1004 prolongs the determination time of the tracking setting. Furthermore, in a case where the view angle adjustment apparatus B1004 determines a face direction based on the angle information of the face of the tracking target and determines that the duration of the face direction is longer than the determination time, it adjusts the composition setting to give a space in the direction. This allows the view angle adjustment apparatus B1004 to perform shooting with the composition in which a space is given in the attention direction of the tracking target.

The view angle adjustment apparatus B1004 includes a video acquisition unit A1005, a tracking setting unit A1006, a face detection unit A1007, a tracking processing unit A1008, a face angle complementing unit A1009, a face direction determination unit A1010, a history information holding unit A1011, a tracking setting change unit B1012, a tracking setting recording unit A1013, a view angle operation calculation unit A1014, a view angle operation unit A1015, a video output apparatus A1016, an object detection unit B1018, and an object-of-interest presence/absence determination unit B1019. A description of the same components as in the first embodiment among components of the second embodiment will be omitted or simplified.

The object detection unit B1018 performs object detection processing of detecting an object in a video and the type of the object from video information acquired from the video acquisition unit A1005. An accurate high-speed Deep Learning-based technique may be applied to the object detection processing. For example, the object detection processing may be one of Faster R-CNN, YOLO, SSD, and Mask R-CNN. The object detection processing is not particularly limited. Since Faster R-CNN, YOLO, SSD, and Mask R-CNN are known techniques, and a detailed description thereof will be omitted. The object detection unit B1018 outputs the detected object type and coordinate information to the object-of-interest presence/absence determination unit B1019.

By using the object type and coordinate information acquired from the object detection unit B1018 and a tracking processing result and face direction information of the tracking target acquired from the face direction determination unit A1010, the object-of-interest presence/absence determination unit B1019 determines the presence/absence of an object of interest to which the tracking target within the screen pays attention.

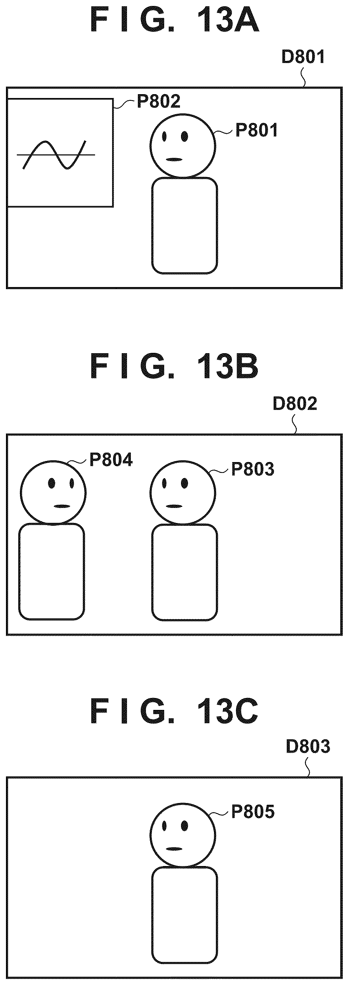

Figs. 13A to 13C are views for explaining a method of determining whether there is an object of interest of the tracking target within the screen. A method of determining the presence/absence of an object of interest will be described with reference to Figs. 13A to 13C. Fig. 13A shows a video D801 including a tracking target P801 and a board area P802. Fig. 13B shows a video D802 including a tracking target P803 and a person P804. Fig. 13C shows a video D803 including a tracking target P805.

In a case where there are the coordinates of an object in the face direction with respect to the coordinate information of the tracking target and the type of the object is a preset specific type, the object-of-interest presence/absence determination unit B1019 determines that there is an object of interest. On the other hand, in a case where there are no coordinates of an object in the face direction, or there are the coordinates of an object but the type of the object is not the specific type, the object-of-interest presence/absence determination unit B1019 determines that there is no object of interest. This embodiment will describe an example in which the specific type is a person or a board area, but the object type is not particularly limited. The object-of-interest presence/absence determination unit B1019 may set the object type by user input.

In the video D801, since the face direction of the tracking target P801 is the left direction and there is the board area P802 in the left direction, the object-of-interest presence/absence determination unit B1019 determines that there is an object of interest. In the video D802, since the face direction of the tracking target P803 is the left direction and there is the person P804 in the left direction, the object-of-interest presence/absence determination unit B1019 determines that there is an object of interest. In the video D803, since the face direction of the tracking target P805 is the left direction but there is no object in the left direction, the object-of-interest presence/absence determination unit B1019 determines that there is no object of interest. The object-of-interest presence/absence determination unit B1019 outputs an object-of-interest presence/absence determination result to the tracking setting change unit B1012.

The tracking setting change unit B1012 changes the length of the determination time of the tracking setting in accordance with the tracking setting acquired from the tracking setting recording unit A1013 and the object-of-interest presence/absence determination result acquired from the tracking setting change unit B1012. If it is determined that there is an object of interest, the tracking setting change unit B1012 shortens the determination time. On the other hand, if it is determined that there is no object of interest, the tracking setting change unit B1012 prolongs the determination time.

By using the tracking processing result and face direction information acquired from the history information holding unit A1011 and the tracking setting, the tracking setting change unit B1012 determines whether it is necessary to change the composition setting. If it is determined that it is necessary to change the composition setting, the tracking setting change unit B1012 changes the composition setting. A method of changing the composition setting using the tracking setting is the same as that by the tracking setting change unit A1012 and a description thereof will be omitted. The tracking setting change unit B1012 outputs the changed tracking setting to the tracking setting recording unit A1013.

The remaining blocks of the second embodiment are the same as in the first embodiment and a description thereof will be omitted. A hardware configuration according to the second embodiment is the same as in the first embodiment and a description thereof will be omitted.

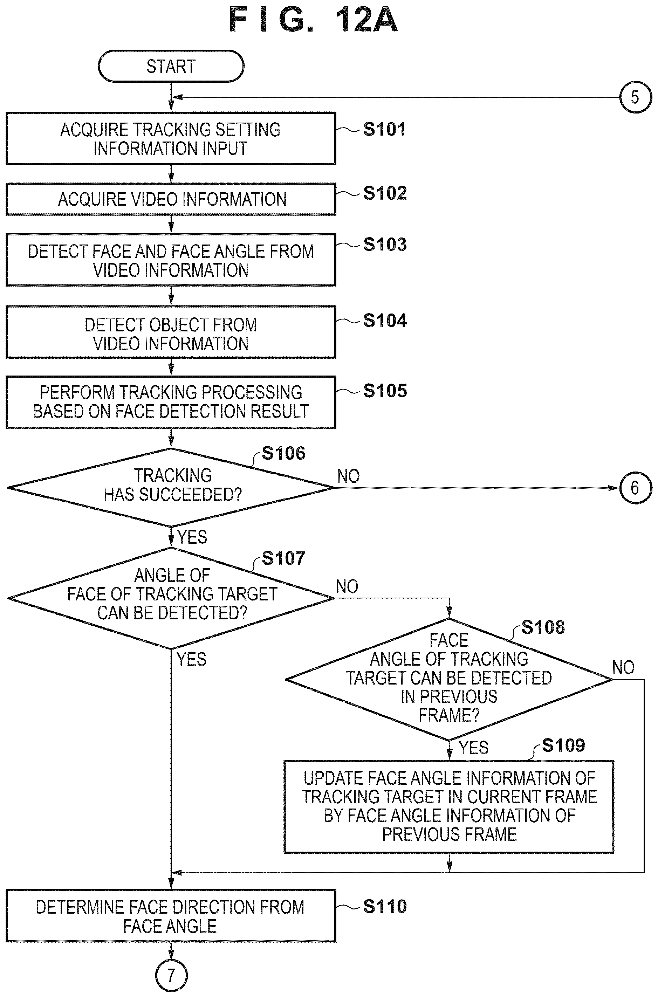

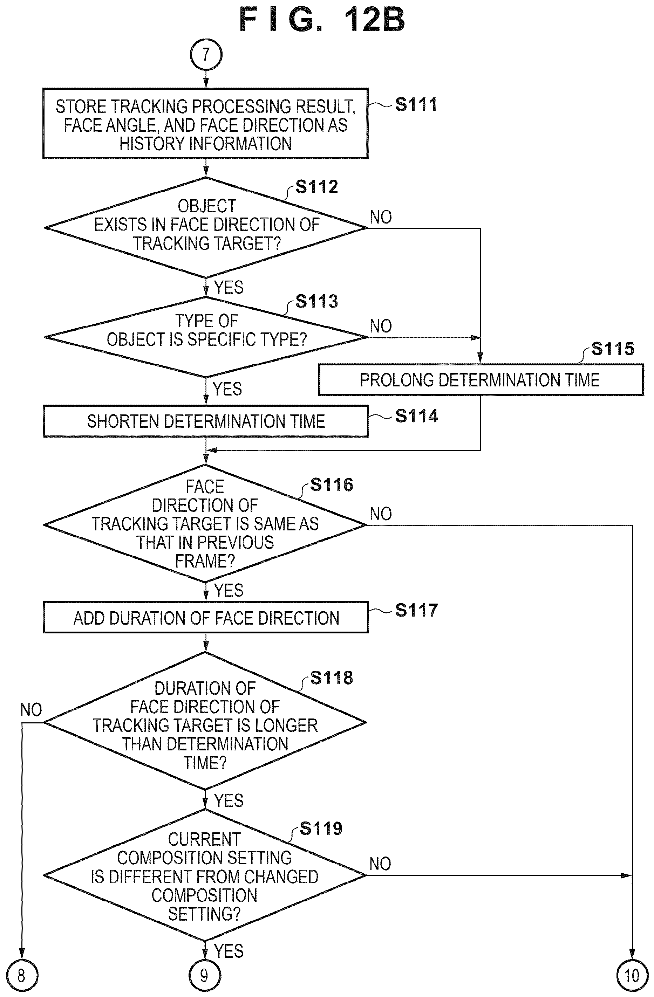

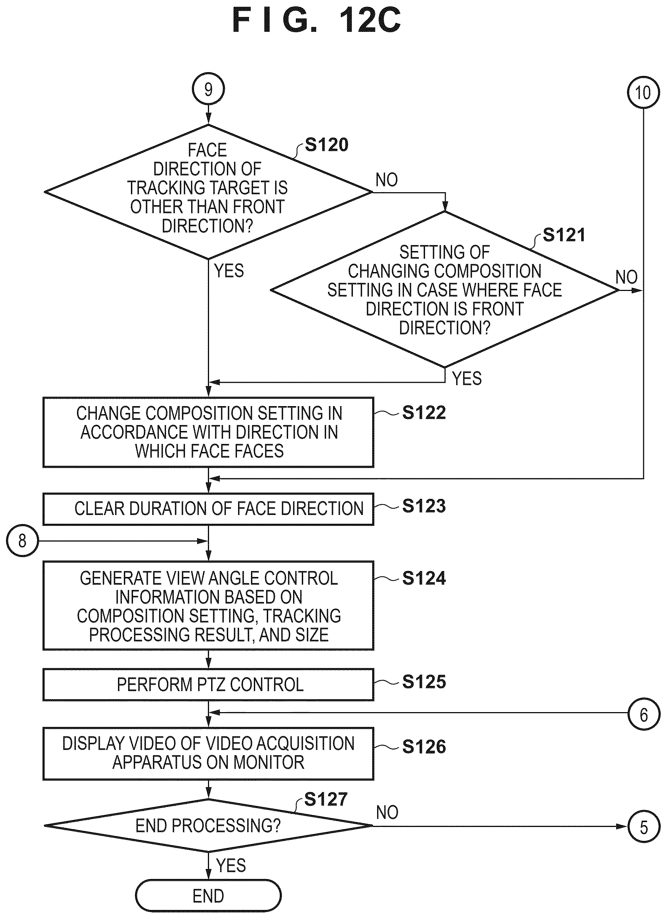

A procedure of performing automatic shooting processing of the automatic shooting system will be described with reference to a flowchart shown in Figs. 12A, 12B, and 12C. Figs. 12A, 12B, and 12C are a flowchart of automatic shooting processing executed by the view angle adjustment apparatus B1004 according to the second embodiment. The automatic shooting system B1000 starts automatic shooting processing upon activation by a user operation. Note that a description of the same processes as in the first embodiment will be omitted.

In step S101, the tracking setting unit A1006 acquires tracking setting information input from the user input acquisition apparatus A1002. The tracking setting unit A1006 outputs the tracking setting information to the tracking setting recording unit A1013, and the process advances to step S102.

In step S102, the video acquisition unit A1005 acquires information of a shot video from the video acquisition apparatus A1001. The video acquisition unit A1005 outputs the shot video to the face detection unit A1007, the video output apparatus A1016, and the object detection unit B1018, and the process advances to step S103.

In step S103, the face detection unit A1007 performs face detection using the acquired shot video. The face detection unit A1007 outputs a face detection result including the detected face, the position information, and the angle information of the face to the tracking processing unit A1008, and the process advances to step S104.

In step S104, the object detection unit B1018 performs object detection using the acquired video information. The object detection unit B1018 outputs position information and type information of the detected object to the object-of-interest presence/absence determination unit B1019, and the process advances to step S105.

In step S105, the tracking processing unit A1008 selects a tracking target from the acquired face information, and performs tracking processing. The tracking processing unit A1008 outputs, as a tracking processing result, coordinate information of the tracking target and the angle information of the face to the face angle complementing unit A1009, and the process advances to step S106.

In step S106, the tracking processing unit A1008 determines whether the tracking processing has succeeded. If the tracking processing unit A1008 determines that the tracking processing has succeeded (YES in step S106), the process advances to step S107. On the other hand, if the tracking processing unit A1008 determines that the tracking processing has failed (NO in step S106), the process advances to step S126.

In step S107, by using the acquired coordinate information of the tracking target and the acquired angle information of the face, the face angle complementing unit A1009 determines whether the angle of the face of the tracking target can be detected. If the face angle complementing unit A1009 determines that the angle of the face of the tracking target can be detected (YES in step S107), it outputs the tracking processing result and the face angle information to the face direction determination unit A1010, and the process advances to step S110. On the other hand, if the face angle complementing unit A1009 determines that the angle of the face of the tracking target cannot be detected (NO in step S107), the process advances to step S108.

In step S108, by using the history information of the acquired face angle, the face angle complementing unit A1009 determines whether the face angle of the tracking target can be detected in the previous frame. If the face angle complementing unit A1009 determines that the face angle can be detected (YES in step S108), the process advances to step S109. On the other hand, if the face angle complementing unit A1009 determines that the face angle cannot be detected (NO in step S108), it outputs the tracking processing result and the face angle information to the face direction determination unit A1010, and the process advances to step S110.

In step S109, the face angle complementing unit A1009 updates the face angle information of the tracking target in the current frame by the face angle information of the previous frame indicated by the history information of the face angle. The face angle complementing unit A1009 outputs the tracking processing result and the face angle information to the face direction determination unit A1010, and the process advances to step S110.

In step S110, the face direction determination unit A1010 determines the face direction using the acquired tracking processing result and face angle information. The face direction determination unit A1010 outputs the determined face direction information, the tracking processing result, and the face angle information to the history information holding unit A1011 and the object-of-interest presence/absence determination unit B1019, and the process advances to step S111.

In step S111, the history information holding unit A1011 stores the acquired tracking processing result, face angle information, and face direction information as history information. The history information holding unit A1011 outputs the history information to the face angle complementing unit A1009, the tracking setting change unit B1012, and the view angle operation calculation unit A1014, and the process advances to step S112.

In step S112, by using the acquired tracking processing result and the coordinate information of the object, the tracking setting change unit B1012 determines whether there is an object in the face direction of the tracking target. If the tracking setting change unit B1012 determines that there is an object in the face direction of the tracking target (YES in step S112), the process advances to step S113. On the other hand, if the tracking setting change unit B1012 determines that there is no object in the face direction of the tracking target (NO in step S112), the process advances to step S115.

In step S113, the tracking setting change unit B1012 determines whether the type of the acquired object is a specific type. If the tracking setting change unit B1012 determines that the type of the acquired object is the specific type (YES in step S113), the process advances to step S114. On the other hand, if the tracking setting change unit B1012 determines that the type of the acquired object is not the specific type (NO in step S113), the process advances to step S115.

In step S114, the tracking setting change unit B1012 shortens the determination time included in the acquired tracking setting, and the process advances to step S116.

In step S115, the tracking setting change unit B1012 prolongs the determination time included in the acquired tracking setting, and the process advances to step S116.

In step S116, by using the acquired history information, the tracking setting change unit B1012 determines whether the face direction of the tracking target is the same as that in the previous frame. If the tracking setting change unit B1012 determines that the face direction of the tracking target is the same as that in the previous frame (YES in step S116), the process advances to step S117. On the other hand, if the tracking setting change unit B1012 determines that the face direction of the tracking target is different from that in the previous frame (NO in step S116), the process advances to step S123.

In step S117, the tracking setting change unit B1012 adds the duration of the face direction of the tracking target, and the process advances to step S118.

In step S118, the tracking setting change unit B1012 determines whether it is necessary to change the composition setting by determining whether the duration of the face direction of the tracking target is longer than the determination time. If the tracking setting change unit B1012 determines that the duration of the face direction of the tracking target is longer than the determination time and it is necessary to change the composition setting (YES in step S118), the process advances to step S119. On the other hand, if the tracking setting change unit B1012 determines that the duration of the face direction of the tracking target is shorter than the determination time and it is unnecessary to change the composition setting (NO in step S118), the process advances to step S124.

In step S119, the tracking setting change unit B1012 determines whether the current composition setting is different from the composition setting to be changed. If the tracking setting change unit B1012 determines that the current composition setting is different from the composition setting to be changed (YES in step S119), the process advances to step S120. On the other hand, if the tracking setting change unit B1012 determines that the current composition setting is the same as the composition setting to be changed (NO in step S119), the process advances to step S123.

In step S120, the tracking setting change unit B1012 determines whether the face direction of the tracking target is other than the front direction. If the tracking setting change unit B1012 determines that the face direction of the tracking target is other than the front direction (YES in step S120), the process advances to step S122. On the other hand, if the tracking setting change unit A1012 determines that the face direction of the tracking target is the front direction (NO in step S120), the process advances to step S121.

In step S121, the tracking setting change unit B1012 determines whether a setting of changing the composition setting in a case where the face direction of the tracking target is the front direction is made as the tracking setting. If the tracking setting change unit B1012 determines that a setting of changing the composition setting in a case where the face direction of the tracking target is the front direction is made as the tracking setting (YES in step S121), the process advances to step S122. On the other hand, if the tracking setting change unit B1012 determines that a setting of changing the composition setting in a case where the face direction of the tracking target is the front direction is not made as the tracking setting, that is, a setting of maintaining the current composition setting in a case where the face direction is the front direction is made (NO in step S121), the process advances to step S123.

In step S122, the tracking setting change unit B1012 changes the composition setting in accordance with a direction in which the face of the tracking target faces. The tracking setting change unit B1012 outputs the changed composition setting to the tracking setting recording unit A1013. The tracking setting recording unit A1013 outputs the tracking setting including the acquired composition setting to the tracking setting change unit B1012 and the view angle operation calculation unit A1014, and the process advances to step S123.

In step S123, the tracking setting change unit B1012 clears the duration of the face direction of the tracking target, and the process advances to step S124.

In step S124, the view angle operation calculation unit A1014 calculates view angle control information for an operation in accordance with the acquired composition setting and the tracking processing result. The view angle operation calculation unit A1014 outputs the calculated view angle control information to the view angle operation unit A1015, and the process advances to step S125.

In step S125, the view angle operation unit A1015 generates a PTZ control command based on the acquired view angle control information, and outputs the PTZ control command to the PTZ driving apparatus A1003, and the process advances to step S126. Note that the PTZ driving apparatus A1003 changes the shooting view angle by performing PTZ driving based on the acquired PTZ control command.

In step S126, the video output apparatus A1016 outputs video information acquired from the video acquisition apparatus A1001 to the monitor apparatus A1017, and the process advances to step S127. The monitor apparatus A1017 displays the acquired video.

In step S127, the tracking setting unit A1006 determines whether a stop operation of the automatic shooting processing is performed. For example, the tracking setting unit A1006 may perform this determination processing based on whether an automatic shooting system ON/OFF switch (not shown) is operated by a user operation from the user input acquisition apparatus A1002. If the tracking setting unit A1006 determines that no stop operation is performed (NO in step S127), the process returns to step S101. On the other hand, if the tracking setting unit A1006 determines that the stop operation is performed (YES in step S127), the automatic shooting processing ends.

As described above, according to the second embodiment, if the length of the determination time for determining the duration of the face direction is changed using the direction information of the face direction of the tracking target and the position and type information of the object, and the duration of the face direction of the tracking target is longer than the determination time, the composition setting is changed to give a space in the direction. Therefore, it is possible to perform a view angle operation so as to fit the target within the screen in accordance with the composition setting by changing the composition setting soon after the face direction continues in a case where there is an object of interest of the tracking target within the screen, and changing the composition setting after the face direction continues for a long period in a case where there is no object of interest.

### (Third Embodiment)

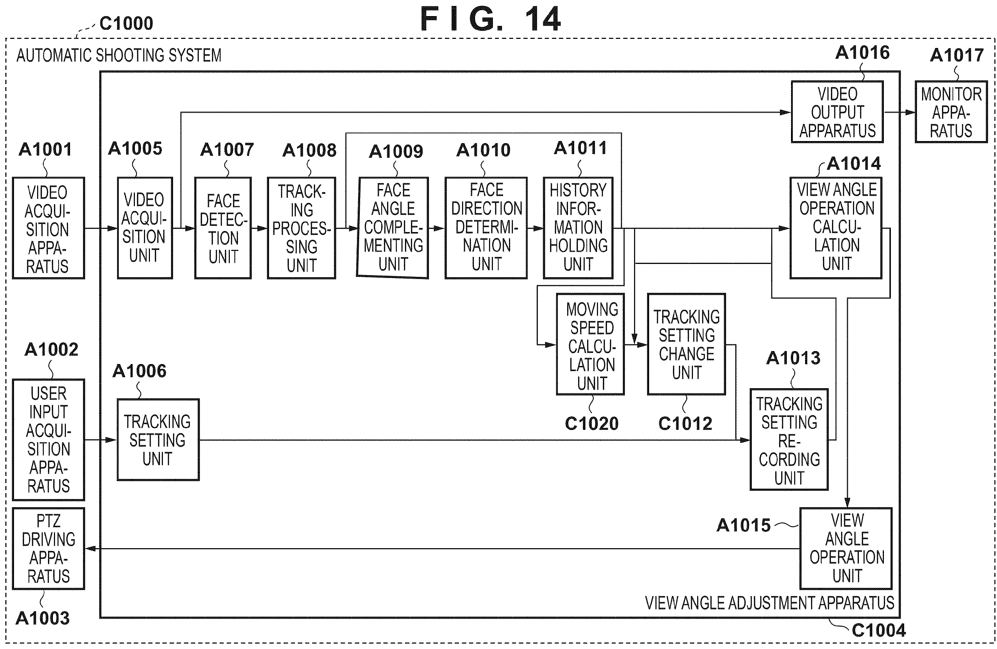

An example of the configuration of an automatic shooting system according to the third embodiment will be described with reference to Fig. 14. Fig. 14 is a block diagram showing the functional configuration of an automatic shooting system C1000 including a view angle adjustment apparatus C1004 according to the third embodiment.

The automatic shooting system C1000 performs tracking processing based on a shot video acquired from a video acquisition apparatus A1001, and performs a view angle operation using a PTZ driving apparatus A1003 so as to fit a tracking target within a screen in accordance with the composition setting of the tracking target acquired from a user input acquisition apparatus A1002. The automatic shooting system C1000 adjusts the change amount of a tracking setting in accordance with angle information of the face of the tracking target, the size of a subject, a moving speed, and the like. In a case where the face of the tracking target continues to face in the same direction for a determination time, the automatic shooting system C1000 adjusts the composition setting to give a space in the direction. This allows the automatic shooting system C1000 to perform automatic shooting with a composition in which a space is given in the attention direction of the tracking target, and to display a shot video on a monitor apparatus A1017.

The automatic shooting system C1000 includes the video acquisition apparatus A1001, the PTZ driving apparatus A1003, the view angle adjustment apparatus C1004, and the monitor apparatus A1017. The view angle adjustment apparatus C1004 is connected to the video acquisition apparatus A1001 and the PTZ driving apparatus A1003 via a network. In addition, the view angle adjustment apparatus C1004 and the monitor apparatus A1017 are connected via a video interface.

The view angle adjustment apparatus C1004 performs tracking processing based on face information detected using the shot video. The view angle adjustment apparatus C1004 adjusts the change amount of the tracking setting in accordance with the angle information of the face of the tracking target, the size of the subject, and the moving speed. In addition, the view angle adjustment apparatus C1004 determines a face direction based on the angle information of the face of the tracking target. If it is determined that the duration time of the face direction is longer than the determination time, the view angle adjustment apparatus C1004 adjusts the composition setting to give a space in the direction in accordance with the change amount of the tracking setting. This allows the view angle adjustment apparatus C1004 to perform shooting with the composition in which a space is given in the attention direction of the tracking target.

The view angle adjustment apparatus C1004 includes a video acquisition unit A1005, a tracking setting unit A1006, a face detection unit A1007, a tracking processing unit A1008, a face angle complementing unit A1009, a face direction determination unit A1010, a history information holding unit A1011, a tracking setting change unit C1012, a tracking setting recording unit A1013, a view angle operation calculation unit A1014, a view angle operation unit A1015, a video output apparatus A1016, and a moving speed calculation unit C1020. A description of the same components as in the above-described embodiments among components of the third embodiment will be omitted or simplified.

The moving speed calculation unit C1020 calculates the moving speed of the tracking target using history information of a tracking processing result acquired from the history information holding unit A1011. The moving speed calculation unit C1020 may calculate the moving speed from the difference in position information of the tracking processing result between consecutive frames and a time difference. The moving speed calculation unit C1020 may calculate the moving speed by obtaining the time average for several consecutive frames with respect to the moving speed calculated using the consecutive frames. The moving speed calculation unit C1020 outputs the calculated moving speed to the tracking setting change unit C1012.

The tracking setting change unit C1012 adjusts the change amount of the tracking setting using the tracking setting acquired from the tracking setting recording unit A1013, the moving speed of the tracking target acquired from the moving speed calculation unit C1020, and the tracking processing result and face angle information acquired from the history information holding unit A1011. By using the tracking processing result acquired from the history information holding unit A1011, the face direction information, and the tracking setting, the tracking setting change unit C1012 determines whether it is necessary to change the composition setting. If it is necessary to change the composition setting, the tracking setting change unit C1012 changes the composition setting. The tracking setting change unit C1012 may comprehensively adjust the change amount of the tracking setting by weighting the angle of the face of the tracking target, the display size of the tracking target on the screen in the composition setting, and the moving speed of the tracking target.

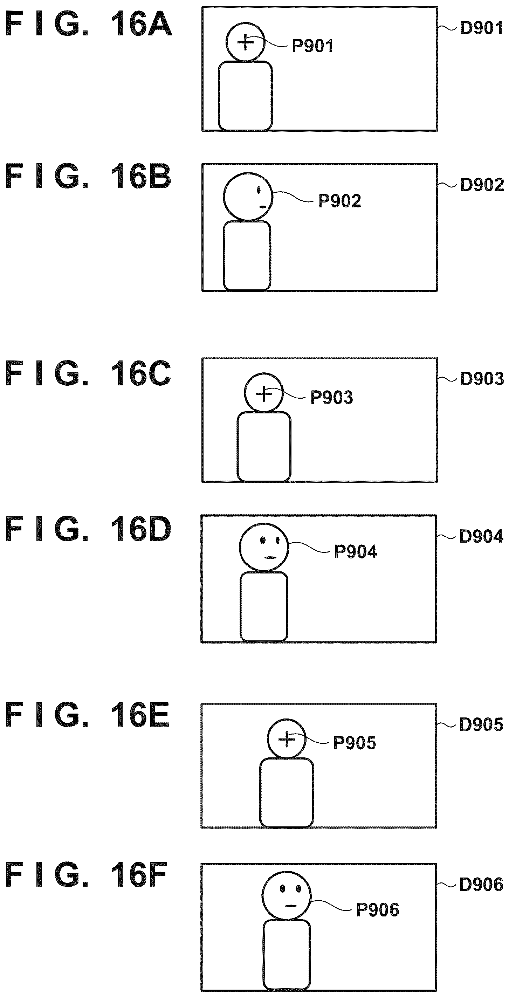

The change amount of the tracking setting will be described with reference to Figs. 16A to 16F, 17A to 17F, 18A to 18F, 19A, and 19B.

Figs. 16A to 16F are views for explaining the magnitude of the change amount of the tracking setting corresponding to the magnitude of the angle of the face of the tracking target according to the third embodiment. Figs. 16A, 16C, and 16E respectively show composition settings D901, D903, and D905. Figs. 16B, 16D, and 16F respectively show shot videos D902, D904, and D906.

Positions P901, P903, and P905 indicate the display positions of the tracking targets in the composition settings D901, D903, and D905, respectively. Tracking targets P902, P904, and P906 indicate tracking targets in the shot videos D902, D904, and D906, respectively. The angles of the faces of the tracking targets are larger in the order of the shot videos D902, D904, and D906. The change amounts of the composition settings are larger in the order of the composition settings D901, D903, and D905 in accordance with the magnitudes of the angles of the faces. The change amount of the composition setting represents the difference between the center of the screen and the display position of the tracking target. The change amounts of the composition settings D901, D903, and D905 are represented as change amounts X1, X2, and X3, respectively.

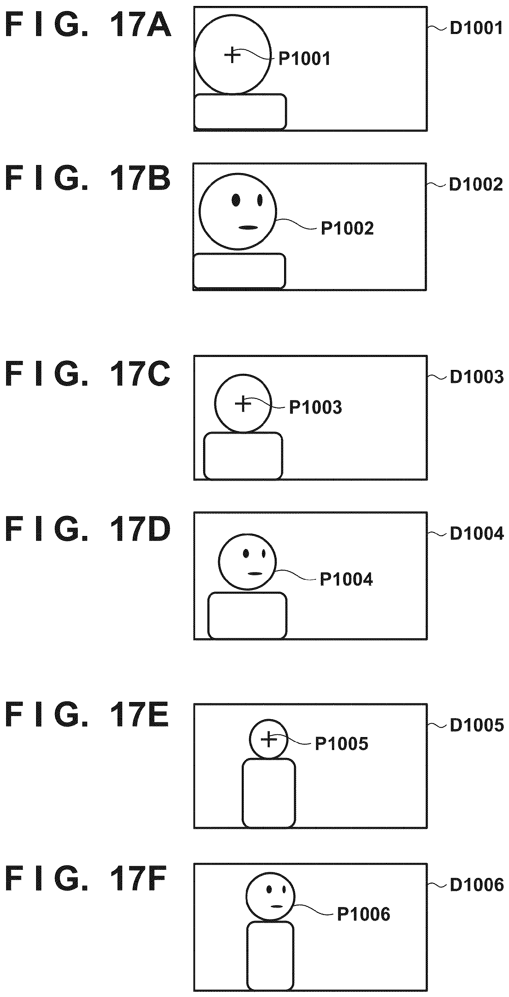

Figs. 17A to 17F are views for explaining the magnitude of the change amount of the tracking setting corresponding to the size of the tracking target displayed on the screen in the composition setting according to the third embodiment. Figs. 17A, 17C, and 17E respectively show composition settings D1001, D1003, and D1005. Figs. 17B, 17D, and 17F respectively show shot videos D1002, D1004, and D1006.

Positions P1001, P1003, and P1005 indicate the display positions of the tracking targets in the composition settings D1001, D1003, and D1005, respectively. Tracking targets P1002, P1004, and P1006 indicate tracking targets in the shot videos D1002, D1004, and D1006, respectively. The sizes of the tracking targets displayed on the screen in the composition settings are larger in the order of the tracking targets P1002, P1004, and P1006. The change amounts of the composition settings are larger in the order of the composition settings D1001, D1003, and D1005 in accordance with the magnitudes of the sizes. The change amounts of the composition settings D1001, D1003, and D1005 are represented as the change amounts X1, X2, and X3, respectively.

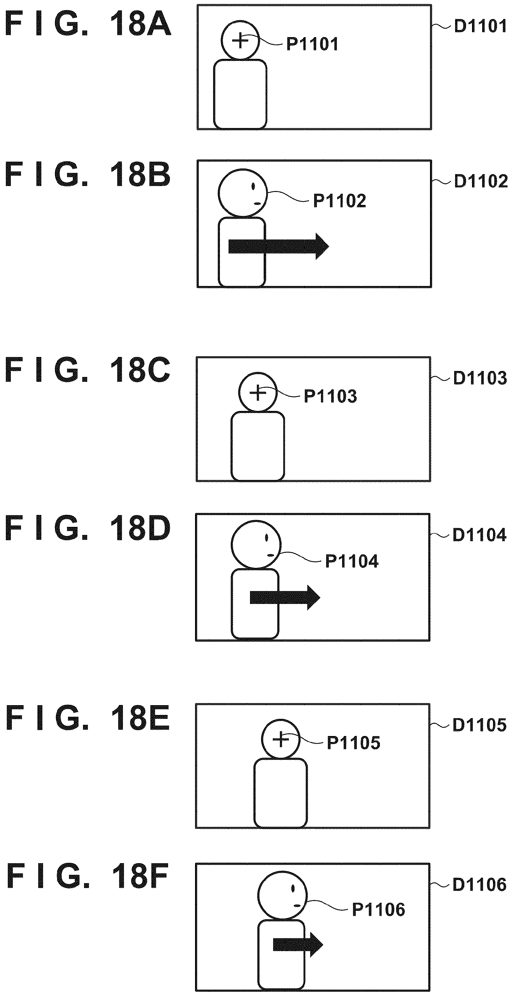

Figs. 18A to 18F are views for explaining the magnitude of the change amount of the tracking setting corresponding to the moving speed of the tracking target according to the third embodiment. Figs. 18A, 18C, and 18E respectively show composition settings D1101, D1103, and D1105. Figs. 18B, 18D, and 18F respectively show shot videos D1102, D1104, and D1106.

Positions P1101, P1103, and P1105 indicate the display positions of the tracking targets in the composition settings D1101, D1103, and D1105, respectively. Tracking targets P1102, P1104, and P1106 indicate tracking targets in the shot videos D1102, D1104, and D1106, respectively. The moving speeds of the tracking targets are higher in the order of the tracking targets P1102, P1104, and P1106. The change amounts of the composition settings are larger in the order of the composition settings D1101, D1103, and D1105 in accordance with descending order of the moving speeds of the tracking targets. The change amounts of the composition settings D1101, D1103, and D1105 are represented as the change amounts X1, X2, and X3, respectively.

Figs. 19A and 19B are views for explaining calculation of the change amount according to the third embodiment. Figs. 19A and 19B are views for explaining a state in which the change amount of the composition setting is comprehensively adjusted by weighting the angle of the face of the tracking target, the size of the tracking target displayed on the screen in the composition setting, the moving speed of the tracking target, and the like according to the third embodiment.

Calculation of the change amount when respective items for deciding the change amount of the tracking setting are equally weighted as an example will be described with reference to Figs. 19A and 19B. Fig. 19A shows a position P1201 where a tracking target is displayed in a composition setting D1201. Fig. 19B shows a shot video D1202 including a tracking target P1202. Assume that the angle of the face is the same as that of the tracking target P906. Assume that the size of the tracking target displayed on the screen in the composition setting D1201 is the same as that of the tracking target P1006. Assume that the moving speed of the tracking target is the same as that of the tracking target P1106.

The change amounts of the respective items are the change amount X3, the change amount X3, and the change amount X3. If the items are equally weighted (= 1), the change amount of the composition setting D1201 is the change amount X3 given by: $\left(X3+X3+X3\right) / 3 = X 3$

This embodiment has explained an example when the respective items are equally weighted, but weighting is not particularly limited. For example, the tracking setting change unit C1012 may set the weight of a specific item larger than those of the remaining items. The tracking setting change unit C1012 may set the weights of the items so as to decide the change amount only by a specific item.

A method of changing the composition setting using the tracking setting is the same as that by the tracking setting change unit A1012 and a description thereof will be omitted. The tracking setting change unit C1012 outputs the changed tracking setting to the tracking setting recording unit A1013.

The remaining blocks of the third embodiment are the same as in the above-described embodiments and a description thereof will be omitted. A hardware configuration according to the third embodiment is the same as in the first embodiment and a description thereof will be omitted.

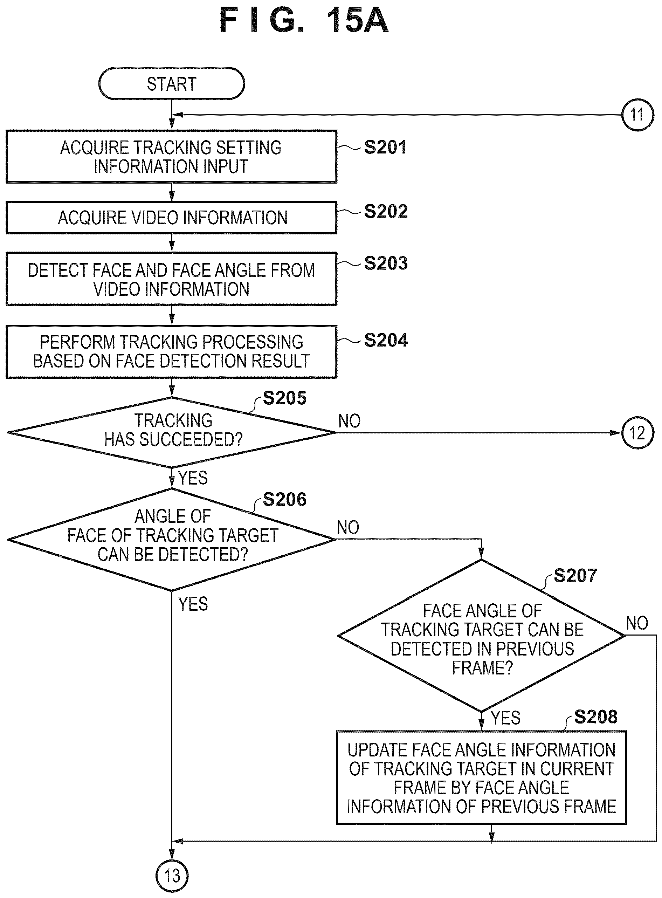

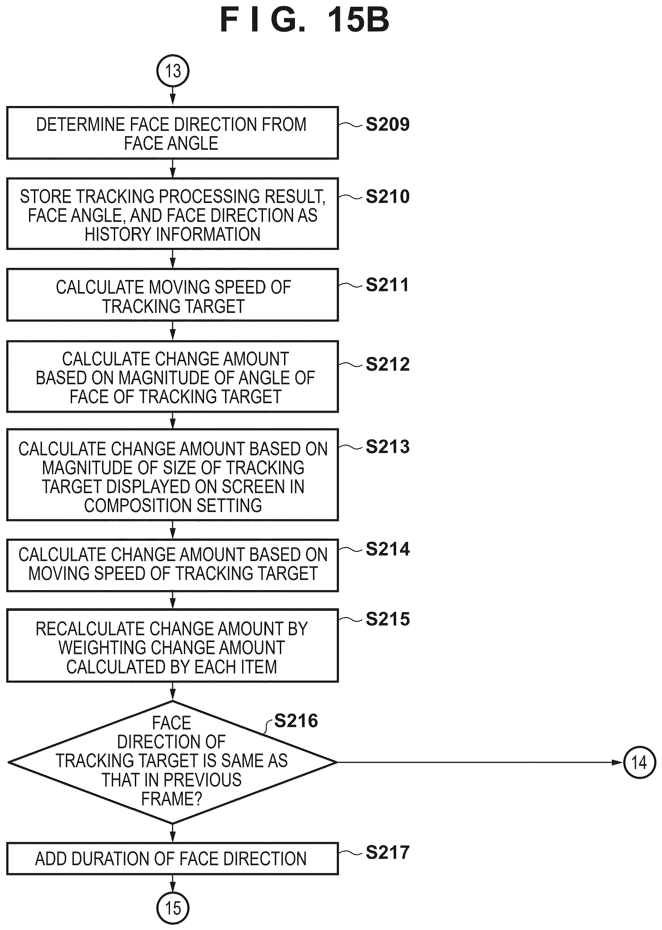

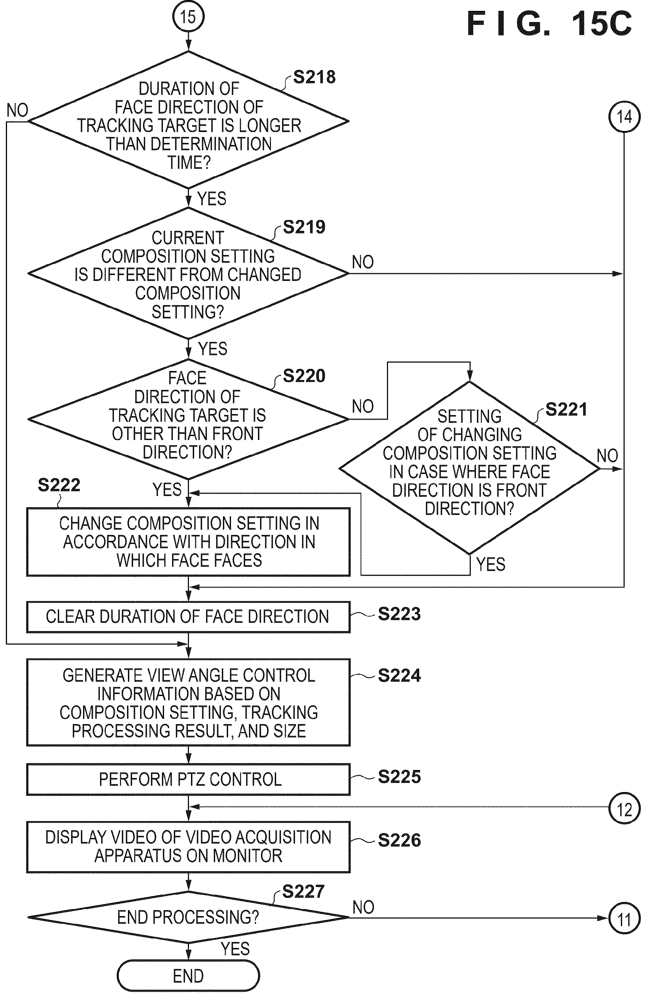

A procedure of performing automatic shooting processing of the automatic shooting system will be described with reference to a flowchart shown in Figs. 15 A, 15B, and 15C. Figs. 15 A, 15B, and 15C are a flowchart of automatic shooting processing executed by the view angle adjustment apparatus C1004 according to the third embodiment. The automatic shooting system C1000 starts automatic shooting processing upon activation by a user operation.

In step S201, the tracking setting unit A1006 acquires tracking setting information input from the user input acquisition apparatus A1002. The tracking setting unit A1006 outputs the tracking setting information to the tracking setting recording unit A1013, and the process advances to step S202.

In step S202, the video acquisition unit A1005 acquires information of a shot video from the video acquisition apparatus A1001. The video acquisition unit A1005 outputs the shot video to the face detection unit A1007 and the video output apparatus A1016, and the process advances to step S203.

In step S203, the face detection unit A1007 performs face detection using the acquired shot video information. The face detection unit A1007 outputs the position information and the angle information of the detected face to the tracking processing unit A1008, and the process advances to step S204.

In step S204, the tracking processing unit A1008 selects a tracking target from the acquired face information, and performs tracking processing. The tracking processing unit A1008 outputs, as a tracking processing result, coordinate information of the tracking target and the angle information of the face to the face angle complementing unit A1009, and the process advances to step S205.

In step S205, the tracking processing unit A1008 determines whether the tracking processing has succeeded. If the tracking processing unit A1008 determines that the tracking processing has succeeded (YES in step S205), the process advances to step S206. On the other hand, if the tracking processing unit A1008 determines that the tracking processing has failed (NO in step S205), the process advances to step S226.

In step S206, by using the acquired coordinate information of the tracking target and the acquired angle information of the face, the face angle complementing unit A1009 determines whether the angle of the face of the tracking target can be detected. If the face angle complementing unit A1009 determines that the angle of the face of the tracking target can be detected (YES in step S206), it outputs the tracking processing result and the face angle information to the face direction determination unit A1010, and the process advances to step S209. On the other hand, if the face angle complementing unit A1009 determines that the angle of the face of the tracking target cannot be detected (NO in step S206), the process advances to step S207.

In step S207, by using history information of the acquired face angle, the face angle complementing unit A1009 determines whether the face angle of the tracking target can be detected in the previous frame. If the face angle complementing unit A1009 determines that the face angle of the tracking target can be detected in the previous frame (YES in step S207), the process advances to step S208. On the other hand, if the face angle complementing unit A1009 determines that the face angle of the tracking target cannot be detected in the previous frame (NO in step S207), it outputs the tracking processing result and the face angle information to the face direction determination unit A1010, and the process advances to step S209.

In step S208, the face angle complementing unit A1009 updates the face angle information of the tracking target in the current frame by the face angle information of the previous frame included in the history information of the face angle. The face angle complementing unit A1009 outputs the tracking processing result and the face angle information to the face direction determination unit A1010, and the process advances to step S209.

In step S209, the face direction determination unit A1010 determines the face direction using the acquired tracking processing result and face angle information. The face direction determination unit A1010 outputs the determined face direction information, the tracking processing result, and the face angle information to the history information holding unit A1011, and the process advances to step S210.

In step S210, the history information holding unit A1011 stores the acquired tracking processing result, face angle information, and face direction information as history information. The history information holding unit A1011 outputs the history information to the face angle complementing unit A1009, the tracking setting change unit C1012, the view angle operation calculation unit A1014, and the moving speed calculation unit C1020, and the process advances to step S211.

In step S211, the moving speed calculation unit C1020 calculates the moving speed of the tracking target using the acquired history information of the tracking target, and outputs it to the tracking setting change unit C1012, and the process advances to step S212.

In step S212, the tracking setting change unit C1012 calculates the change amount of the display position of the tracking target in the composition setting based on the magnitude of the acquired angle of the face of the tracking target, and the process advances to step S213.

In step S213, the tracking setting change unit C1012 calculates the change amount of the display position of the tracking target in the composition setting based on the magnitude of the size of the tracking target displayed on the screen in the acquired composition setting, and the process advances to step S214.

In step S214, the tracking setting change unit C1012 calculates the change amount of the display position of the tracking target in the composition setting based on the acquired moving speed of the tracking target, and the process advances to step S215.

In step S215, the tracking setting change unit C1012 weights the change amount calculated by each item, and recalculates the change amount, and the process advances to step S216.

In step S216, by using the acquired history information, the tracking setting change unit C1012 determines whether the face direction of the tracking target is the same as that in the previous frame. If the tracking setting change unit C1012 determines that the face direction is the same as that in the previous frame (YES in step S216), the process advances to step S217. If the tracking setting change unit C1012 determines that the face direction is not the same as that in the previous frame (NO in step S216), the process advances to step S223.

In step S217, the tracking setting change unit C1012 adds the duration of the face direction of the tracking target, and the process advances to step S218.

In step S218, the tracking setting change unit C1012 determines whether it is necessary to change the composition setting by determining whether the duration of the face direction of the tracking target is longer than the determination time. If the tracking setting change unit C1012 determines that the duration of the face direction of the tracking target is longer than the determination time and it is necessary to change the composition setting (YES in step S218), the process advances to step S219. On the other hand, if the tracking setting change unit C1012 determines that the duration of the face direction of the tracking target is shorter than the determination time and it is unnecessary to change the composition setting (NO in step S218), the process advances to step S224.

In step S219, the tracking setting change unit C1012 determines whether the current composition setting is different from the composition setting to be changed. If the tracking setting change unit C1012 determines that the current composition setting is different from the composition setting to be changed (YES in step S219), the process advances to step S220. On the other hand, if the tracking setting change unit C1012 determines that the current composition setting is the same as the composition setting to be changed (NO in step S219), the process advances to step S223.

In step S220, the tracking setting change unit C1012 determines whether the face direction of the tracking target is other than the front direction. If the tracking setting change unit C1012 determines that the face direction of the tracking target is other than the front direction (YES in step S220), the process advances to step S222. On the other hand, if the tracking setting change unit C1012 determines that the face direction of the tracking target is the front direction (NO in step S220), the process advances to step S221.

In step S221, the tracking setting change unit C1012 determines whether a setting of changing the composition setting (or view angle) in a case where the face direction of the tracking target is the front direction is made as the tracking setting. If the tracking setting change unit C1012 determines that a setting of changing the composition setting in a case where the face direction of the tracking target is the front direction is made (YES in step S221), the process advances to step S222. On the other hand, if the tracking setting change unit C1012 determines that a setting of changing the composition setting in a case where the face direction of the tracking target is the front direction is not made as the tracking setting, that is, a setting of maintaining the current composition setting in a case where the face direction is the front direction is made (NO in step S221), the process advances to step S223.

In step S222, the tracking setting change unit C1012 changes the composition setting in accordance with a direction in which the face of the tracking target faces, and outputs the changed composition setting to the tracking setting recording unit A1013. The tracking setting recording unit A1013 outputs the tracking setting including the acquired composition setting to the tracking setting change unit C1012 and the view angle operation calculation unit A1014, and the process advances to step S223.

In step S223, the tracking setting change unit C1012 clears the duration of the face direction of the tracking target, and the process advances to step S224.

In step S224, the view angle operation calculation unit A1014 calculates view angle control information for an operation in accordance with the acquired composition setting and the tracking processing result, and outputs it to the view angle operation unit A1015, and the process advances to step S225.

In step S225, the view angle operation unit A1015 outputs a PTZ control command to the PTZ driving apparatus A1003 based on the acquired view angle control information, and the process advances to step S226. The PTZ driving apparatus A1003 changes the shooting view angle by performing PTZ driving based on the acquired PTZ control command.

In step S226, the video output apparatus A1016 outputs video information acquired from the video acquisition apparatus A1001 to the monitor apparatus A1017, and the process advances to step S227. The monitor apparatus A1017 displays the acquired video.

In step S227, the tracking setting unit A1006 determines whether a stop operation of the automatic shooting processing is performed. For example, the tracking setting unit A1006 may perform this determination processing based on whether an automatic shooting system ON/OFF switch (not shown) is operated by a user operation from the user input acquisition apparatus A1002. If the tracking setting unit A1006 determines that no stop operation is performed (NO in step S227), the process returns to step S201. On the other hand, if the tracking setting unit A1006 determines that the stop operation is performed (YES in step S227), the automatic shooting processing ends.

As described above, the change amount of the display position of the tracking target on the screen in the composition setting is calculated based on each of the magnitude of the angle of the face of the tracking target, the size setting of the tracking target displayed on the screen in the composition setting, and the moving speed of the tracking target, and the change amount is recalculated by weighting each calculated change amount. In a case where the duration of the face direction of the tracking target is equal to or longer than the determination time, it is possible to change the composition setting to give a space in the direction in accordance with the calculated change amount, and perform a view angle operation so as to fit the target within the screen in accordance with the composition setting.

The preferred embodiments of the present disclosure have been described above. However, the present disclosure is not limited to these embodiments and various modifications and changes can be made within the spirit and scope of the present disclosure.

For example, in each of the configurations according to the first to third embodiments, the face detection unit may detect face angle information in a vertical direction when detecting a face. In this case, the face direction determination unit may determine the face direction in the vertical direction, and adjust the vertical direction when adjusting the display position of the tracking target on the screen in the composition setting.

In each of the configurations according to the first to third embodiments, the tracking setting change unit may change the determination time based on utterance of the tracking target. For example, if another utterance occurs from the utterance direction of the tracking target, the tracking setting change unit may shorten the determination time. In the configuration according to the second embodiment, the object-of-interest presence/absence determination unit may analyze the utterance direction and utterance contents of the tracking target, and determine the presence/absence of an object of interest based on a conversation with another person outside the screen. The tracking setting change unit may change the determination time based on the object-of-interest presence/absence determination result.

In each of the configurations according to the first to third embodiments, a condition for changing the composition setting in accordance with the face direction of the tracking target may be a condition that the frequency of the face direction determined within a predetermined time is highest and the number of times of determination of the face direction within a predetermined time is larger than a threshold. If the condition is satisfied, the tracking setting change unit may change the composition setting to give a space in the face direction.

In each of the configurations according to the first to third embodiments, the face direction determination unit may determine the face direction of the tracking target using the angle of the face, the angle of the line of sight, the angle information estimated from orientation information, and the like.

In each of the configurations according to the first to third embodiments, the time required to change the display position may be changed in accordance with the determination time for determining continuation of the face direction and the change amount of the display position of the tracking target on the screen in the composition setting.

In the configuration according to the second embodiment, a condition for changing the length of the determination time for determining continuation of the face direction may be a condition that when adjusting the display position of the tracking target on the screen in the composition setting to give a space in the face direction, the tracking target is moved in a direction opposite to the face direction, that is, a direction to approach the edge of the screen with reference to the tracking target. When the condition is satisfied, the tracking setting change unit may shorten the determination time.

In each of the configurations according to the first to third embodiments, in a case where the face direction determination unit cannot determine the face direction, the tracking setting change unit may maintain the composition setting of the tracking setting.

In each of the configurations according to the first to third embodiments, in a case where the duration of the face direction is equal to or longer than the determination time and the current view angle already gives a space in the face direction, the tracking setting change unit may maintain the current composition setting indicated by the tracking setting.

### (Other Embodiments)

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An information processing apparatus (2000, A1004) comprising:
first determination means (A1010) configured to determine a face direction of a tracking target from a video captured by an image capturing apparatus (A1001);
second determination means (A1012) configured to determine a tracking setting regarding an image capturing setting of the tracking target in accordance with a duration of the face direction; and
operating means (A1015) configured to operate a view angle to set a space in the face direction in accordance with the tracking setting.

2. The apparatus according to claim 1, wherein the face direction is determined based on an angle of a face.

3. The apparatus according to claim 2, further comprising:
detection means configured to detect a face of the tracking target from the video; and
complement means configured to complement, in a case where an angle of the face cannot be detected, the angle of the face based on an angle of a face detected before the angle of the face cannot be detected.

4. The apparatus according to claim 2 or 3, wherein the face direction is determined by comparing the angle of the face with a threshold.

5. The apparatus according to any one of claims 1 to 4, further comprising third determination means configured to determine a presence or absence of an object of interest to which the tracking target pays attention; wherein
a determination time to be compared with the duration is determined based on a result of determining the presence or absence.

6. The apparatus according to claim 5, further comprising fourth determination means configured to determine a type of the object by detecting the object from the video, wherein
in a case where there is the object in the face direction and the type of the object is a specific type, it is determined that there is the object of interest, and
in a case where there is no object in the face direction or the type of the object is not a specific type, it is determined that there is no object of interest.

7. The apparatus according to claim 5 or 6, wherein the determination time is determined based on an utterance of the tracking target.

8. The apparatus according to any one of claims 1 to 7, wherein the view angle is controlled based on the tracking setting so that the face is located at a predetermined position in the video and has a predetermined size in the video.

9. The apparatus according to claim 8, further comprising calculation means configured to calculate a moving speed of the tracking target; and to calculate a change amount of the tracking setting based on the angle of the face, a composition setting for setting the face to have a predetermined size in the video, and the moving speed.

10. The apparatus according to claim 9, wherein a change amount of the view angle is calculated by weighting the change amount calculated from each of the angle of the face, the composition setting for setting the face to have the predetermined size in the video, and the moving speed.

11. The apparatus according to any one of claims 1 to 10, wherein in a case where the direction of the face is a front direction, a current composition setting indicated by the tracking setting is maintained.

12. The apparatus according to any one of claims 1 to 11, wherein in a case where the face direction cannot be determined, a current composition setting indicated by the tracking setting is maintained.

13. The apparatus according to any one of claims 1 to 12, wherein in a case where the duration of the face direction is equal to or longer than a determination time and a current view angle already gives a space in the face direction, a current composition setting indicated by the tracking setting is maintained.

14. The apparatus according to any one of claims 1 to 13, wherein in a case where the duration of the face direction is equal to or longer than a determination time, the tracking setting is changed.

15. An information processing method comprising:
determining a face direction of a tracking target from a video captured by an image capturing apparatus;
determining a tracking setting regarding an image capturing setting of the tracking target in accordance with a duration of the face direction; and
operating a view angle to set a space in the face direction in accordance with the tracking setting.

16. A computer program that, when executed by a computer, causes the computer to execute the information processing method according to claim 15.
